# EUROPEAN PATENT SPECIFICATION

(11) **EP 3 680 181 B1**
(45) Date of publication and mention of the grant of the patent: **03.12.2025**
(21) Application number: 20150177.2
(22) Date of filing: 03.01.2020
(51) Int. Cl.: B64F 1/02, B64F 3/00, B64C 39/02, B64C 25/68, B64D 17/80, B63B 35/50

(54) **CABLE-ASSISTED POINT TAKE-OFF AND LANDING OF UNMANNED FLYING OBJECTS**
KABELGESTÜTZTER PUNKTSTART UND KABELGESTÜTZTE LANDUNG VON UNBEMANNTEN FLUGOBJEKTEN
DÉCOLLAGE ET ATTERRISSAGE PONCTUELS ASSISTÉS PAR CÂBLE D'OBJETS VOLANTS SANS ÉQUIPAGE

(30) Priority: 08.01.2019 IL 26414919
(43) Date of publication of application: 15.07.2020
(73) Proprietor: Yoffe, Meir, 5829309 Holon (IL)
(72) Inventor: Yoffe, Meir, 5829309 Holon (IL)
(74) Representative: Balder IP Law, S.L.

(56) References cited:
- WO-A1-01/07318
- WO-A1-2013/171735
- GB-A- 733 770
- US-B2- 8 172 177
- MACNOISE: "A I", 1 November 2016 (2016-11-01), XP055695795, Retrieved from the Internet <URL:https://www.macnoise.com/sites/www.macenvironment.org/files/pdf/factsheet-4_how_are_runway_decisions_made.pdf> [retrieved on 20200515]
- TAYLOR DAVID: "Effect of Ship Motion on DD-963 Ship Airwake Simulated by Multizone Navier-Stokes Solution | Twenty-First Symposium on Naval Hydrodynamics | The National Academies Press", 1 December 1997 (1997-12-01), XP093284070, Retrieved from the Internet <URL:https://nap.nationalacademies.org/read/5870/chapter/70>

## Description

### FIELD OF THE INVENTION

The disclosed technique relates to systems and methods for point take-off and landing (PTOL) of unmanned flying objects, such as unmanned aerial vehicles (UAVs), onto a base vehicle.

### BACKGROUND

Point take-off and landing (PTOL) relates to the capabilities of fixed-wing unmanned aerial vehicles (UAVs) and other aircrafts to perform take-off and landing operations without a runway at a confined location. In today's high spending UAV military market, there is a lack of good solutions for enabling PTOL of UAVs. One specific example is the recovery of large-wingspan fixed-wing UAVs onto moving vehicles on land or on water. The large wingspans of these UAVs that need flat runway and rather tangential touchdown on it for landing, complicates the ability to land onto a ship or similar aquatic vessel, which may be subject to large amplitude and rapid angular movements along its roll, pitch and yaw axes. The difficulty for safe UAV landing may be further exacerbated by the ship's masts and antennas and by the turbulence behind the ship superstructure. Besides the lack of a runway, PTOL of a UAV onto (or from) a land vehicle may also be complicated by the presence of obstacles in the vicinity of the vehicle, by strong winds, and by darkness or low-visibility weather conditions.

The need for UAV recovery onto a ship has a long history. In 1985, Floyd Kennedy of the AIL Corporation discussed the need for fleet-integral UAVs to provide Airborne Early Warning (AEW) to US Navy non-aviation task forces. The solution was observed to lie with fixed-wing UAVs due to their endurance capabilities, raising issues for point landing of such UAVs onto small ships (i.e., non-aircraft carriers), such as the concern that their long wings may interfere with the ship deck elements. Especially noteworthy was the U.S. Congress-defined requirement for "Endurance Category" UAVs (i.e., which are capable of remaining airborne for long durations) for US Navy ships, in the first "UAV Masterplan" of 1988, although no such system appears to have been deployed as of now (January 2019). One problem is that fixed-wing UAVs and other similar flying objects cannot hover like a helicopter while connecting to a ship's cable, so the US Navy's RAST (Recovery Assist & Transfer) system solution for helicopters cannot be used. Additionally, there is a need to cope with turbulence behind the ship's superstructure, wind-over-deck from all directions and at various intensities, and darkness or low-visibility weather conditions.

US 7,219,856 discloses an embodiment where a UAV system is coupled to the deck of a sea faring vessel. The UAV capture system includes a single arresting line that is supported by a stanchion, which may be disposed on a rotatable boom. The UAV hooks onto the line and is abruptly stopped in flight and once stopped it appears to be left hanging, which may cause damage to the UAV.

AU 2009/200804 discloses an embodiment relating to a system for landing UAVs. The system comprises an arm-based structure and an axis means installed along the arm of the structure, enabling the arm to move around it. The arm is propelled into rotational motion around the axis from the instant that the UAV connects to landing arm. It appears that the rotational momentum of UAVs, especially heavier ones, may apply a taxing force onto the rotational axis. Document WO 2013/171735 A1 describes systems and methods for point take-off and landing (PTOL) of unmanned flying objects, such as unmanned aerial vehicles (UAVs), onto a confined landing surface associated with a landing body. This document discloses, in its wording, a launch and recovery assembly comprising: a main pole; a receiving latch and a cable release/retraction mechanism; wherein the flying object is equipped with a suspension cable with a latching element and each cable release/retraction mechanisms is configured for releasing and/or retracting said suspension cable coupled with said latching element.

### SUMMARY

The invention is set out in the appended set of claims.

### BRIEF DESCRIPTION OF THE DRAWINGS

The disclosed technique will be understood and appreciated more fully from the following detailed description taken in conjunction with the drawings in which:
Fig. 1A is a schematic illustration of a UAV landing system with a UAV approaching a desired landing point; Fig. 1B is a schematic illustration of a subsequent stage of the UAV landing system of Fig. 1A, in which the hook latches onto the receiving latch; Fig. 1C is a schematic illustration of a subsequent stage of the UAV landing system of Fig. 1A, in which the UAV is guided toward the landing surface along a desired landing path.
**Fig. 2** is a close-up schematic illustration of the landing system of **Figs. 1A-1C****,** illustrating cable release/retraction mechanism components.
**Fig. 3** is a perspective view schematic illustration of a UAV landing system for landing a UAV in an aquatic environment.

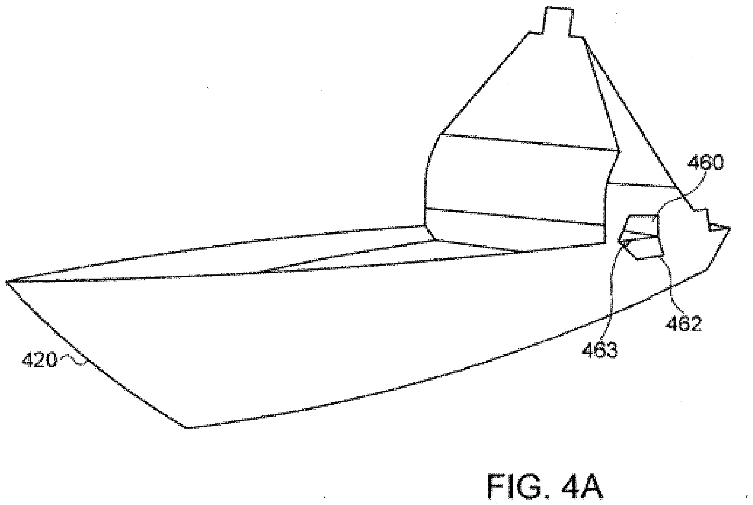

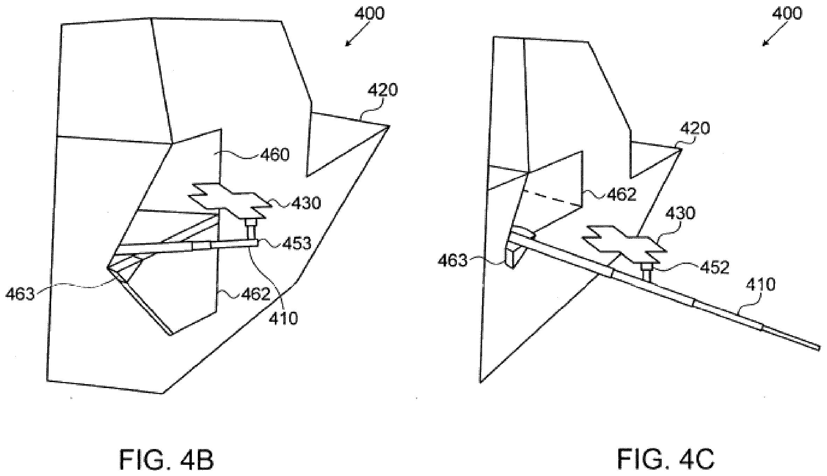

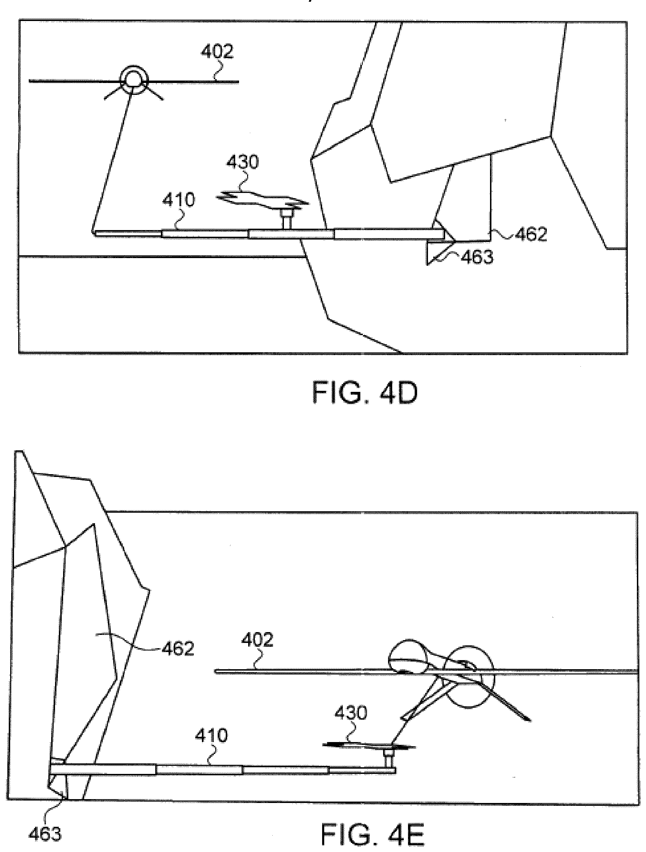

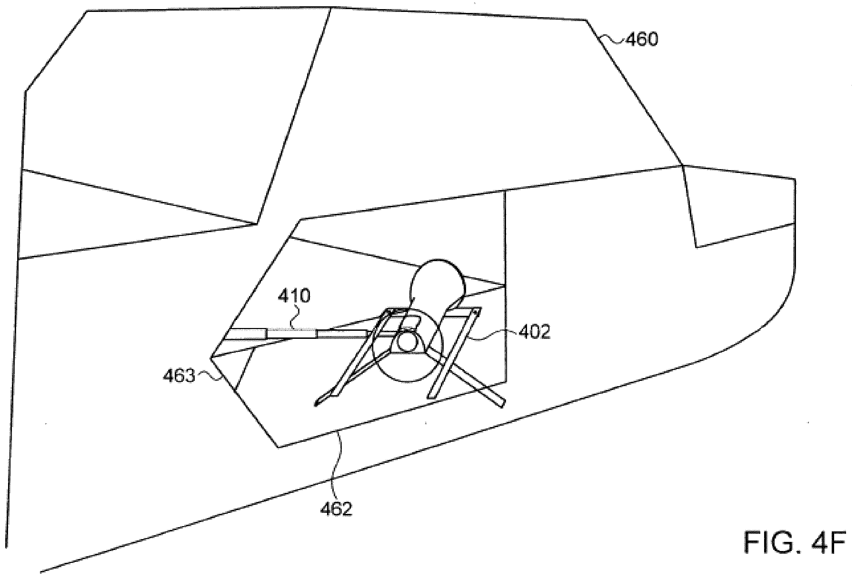

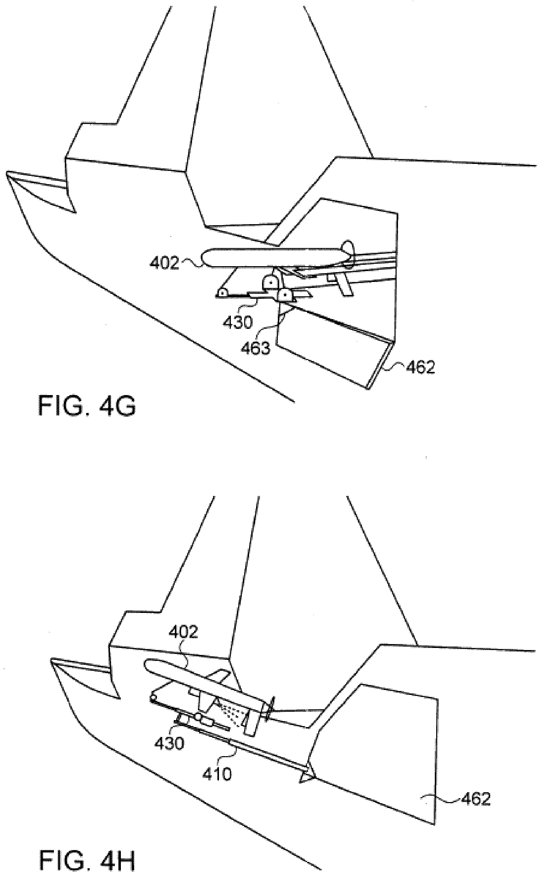

**Fig. 4A** is a perspective view schematic illustration of a ship with a UAV stowage compartment that is enclosed by walls [for radar 'stealth'], having a main and an auxiliary door, that enables complete operation of the PTOL by the Arm even in presence of the walls thru the doors; **Fig. 4B** is a schematic illustration of an initial stage of a UAV landing system for landing a UAV onto the ship of **Fig. 4A****;** **Fig. 4C** is a schematic illustration of a subsequent stage of the UAV landing system of **Fig. 4B****,** in which the landing components are deployed; **Fig. 4D** is a schematic illustration of a subsequent stage of the UAV landing system of Fig. 4B, in which the latching has taken place; **Fig. 4E** is a schematic illustration of a subsequent stage of the UAV landing system of **Fig. 4B****,** in which the UAV is guided onto the landing plate; **Fig. 4F** is a schematic illustration of the ship of **Fig. 4A****,** illustrating a landed UAV entering the stowage compartment; **Fig. 4G** is a schematic illustration of the ship of **Fig. 4A****,** illustrating a UAV exiting the stowage compartment in preparation for a launch; **Fig. 4H** is a schematic illustration of the ship of **Fig. 4A****,** illustrating a UAV launching.

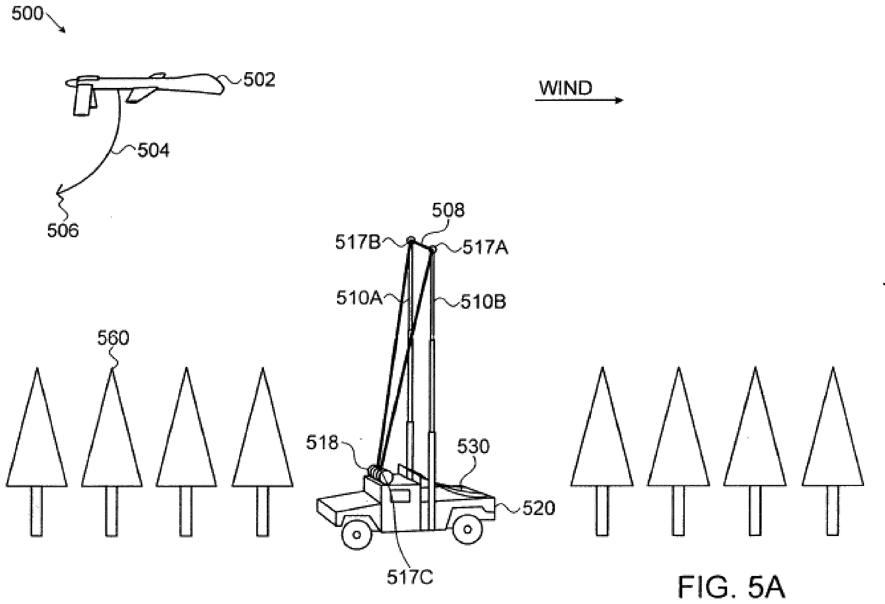

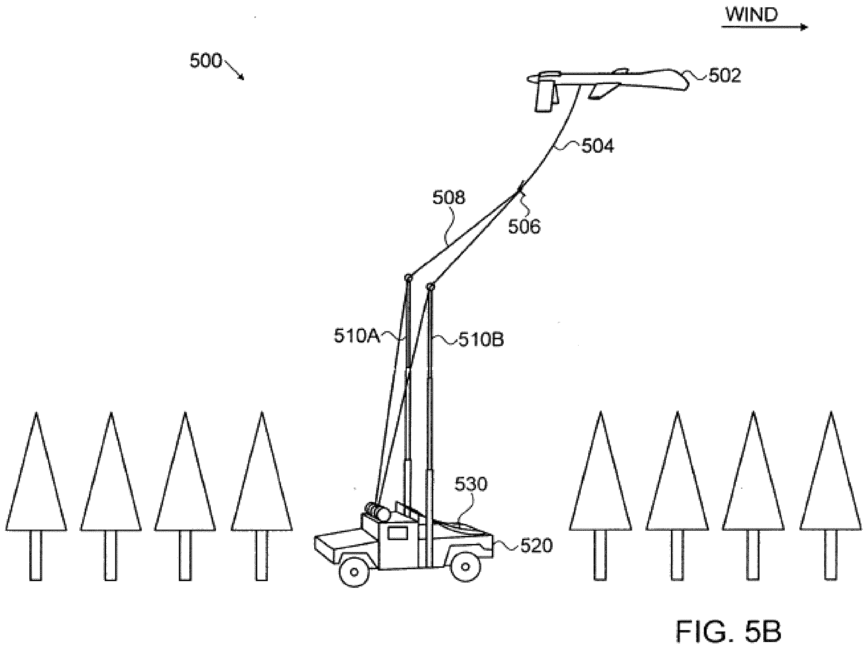

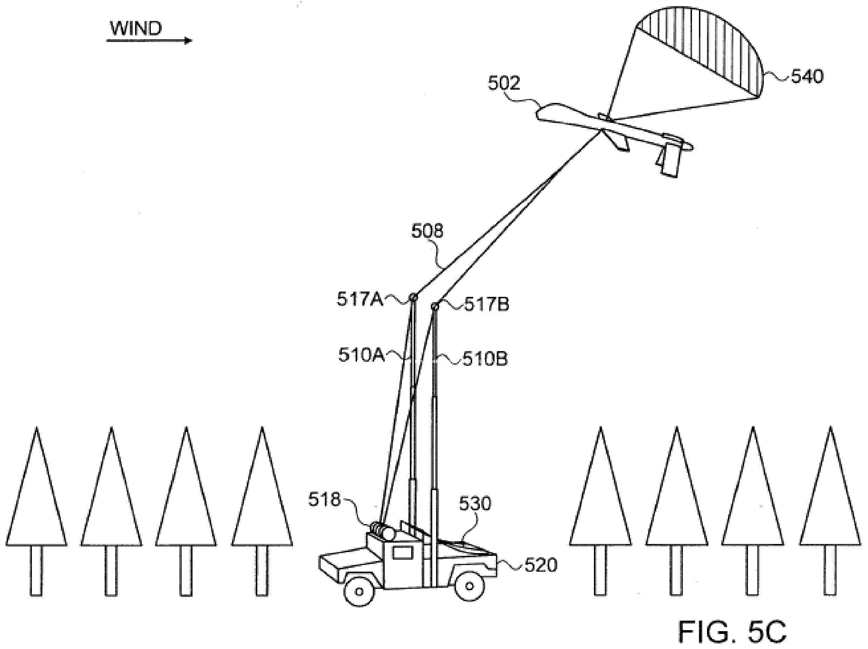

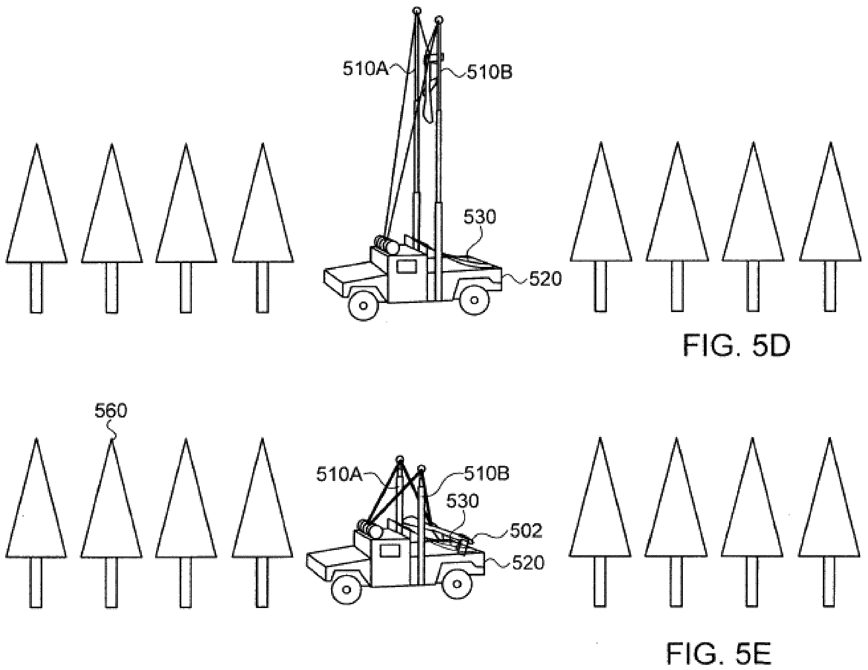

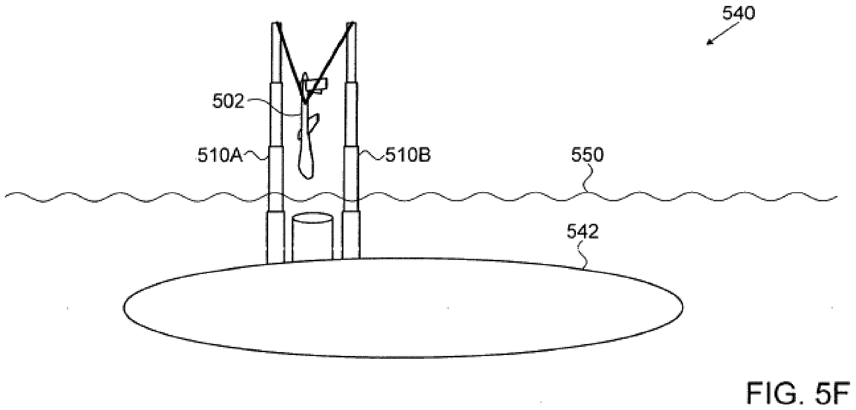

**Fig. 5A** is a perspective view schematic illustration of a UAV landing system mounted on a vehicle, for landing a UAV in a confined area surrounded by proximity to high surrounding obstacles; **Fig. 5B** is a schematic illustration of a subsequent stage of the landing system of **Fig. 5A****,** in which the latching has taken place; **Fig. 5C** is a schematic illustration of a subsequent stage of the landing system of **Fig. 5A****,** in which the UAV is being pulled backwards; **Fig. 5D** is a schematic illustration of a subsequent stage of the landing system of **Fig. 5A****,** in which the UAV has come to rest between the cable supports; **Fig. 5E** is a schematic illustration of a subsequent stage of the landing system of **Fig. 5A****,** in which the UAV has been lowered onto the landing surface; **Fig. 5F** is a schematic illustration of a UAV landing system mounted on a submarine for landing a UAV in an aquatic environment. In manner that needs not the submarine to come up on the surface.
**Fig. 6A** is a schematic illustration of a UAV landing system for landing a UAV directly onto a land vehicle, in which the UAV is approaching the landing system downwind and pulled back to landing upwind; **Fig. 6B** is a schematic illustration of a subsequent stage of the landing system of **Fig. 6A****,** in which the latching has taken place; **Fig. 6C** is a schematic illustration of a subsequent stage of the landing system of **Fig. 6A****,** in which the UAV is being pulled upwind to touchdown.
**Fig. 7** is a flow diagram of a method for landing a flying object onto a landing surface at a landing body.
**Fig. 8A** is a perspective view schematic illustration of an exemplary landing scenario that utilizes the wind to maneuver the UAV and create required lag behind the base vehicle; **Fig. 8B** is a perspective view schematic illustration of another exemplary landing scenario that utilizes the wind to maneuver the UAV.
**Fig. 9A** is a schematic illustration of a UAV landing system for straight-ahead landing of a UAV; **Fig. 9B** is a schematic illustration of a subsequent stage of the UAV landing system of **Fig. 9A****,** at which the latching has taken place; **Fig. 9C** is a schematic illustration of a subsequent stage of the UAV landing system of **Fig. 9A****,** at which a parachute is deployed to decrease the UAV velocity.
**Fig. 10A** is a schematic illustration of a landing system for sequentially landing multiple unmanned flying objects; **Fig. 10B** is a detailed view schematic illustration depicting different stages of touchdown in conjunction with the latching mechanism of the landing system of **Fig. 10A****.**
**Figs. 11A-11B** are a schematic view illustration of a ship with PTOL systems.
**Fig. 12** is a close-up schematic illustration of a landing system, illustrating cable release/retraction mechanism components and parachute deployment by a landing UAV.
**Fig. 13** is a perspective view schematic illustration of a UAV landing system for landing a UAV in an aquatic environment.
**Figs. 14A-14B** are perspective view schematic illustrations of a UAV landing system for launching and retrieving a UAV, constructed and operative in accordance with some embodiments of the claimed invention.

### DETAILED DESCRIPTION

The disclosed technique overcomes the disadvantages of the prior art by providing systems and methods for point take-off and landing (PTOL) of unmanned flying object, such as an unmanned aerial vehicle (UAV), onto/from a confined landing surface, without a runway. The landing surface is associated with a landing body, such as a land vehicle or an aquatic vessel, which may be in motion during the landing or take-off operations. The disclosed technique is especially useful for PTOL of a UAV during strong winds. The disclosed technique is particularly applicable to the landing/take-off of large-wingspan fixed-wing UAVs onto/from a ship.

The term "flying object", and any variations thereof, as used herein, refers to any type of unmanned object or vehicle, capable of controlled flight maneuvering along an aerial trajectory during a take-off or landing, including but not limited to: a UAV, a manned aircraft, a parachuted parcel, and the like.

The term "ballistic parachute" as used herein refers to any parachute that is ejected from its casing by a small explosive charge or spring. The advantage of a ballistic parachute over a conventional parachute is that it ejects the parachute canopy (oftentimes via a small charge) and causes it to open rapidly, this makes it ideal for attaching to light aircraft and microlights, where an emergency situation may occur in the air, or for facilitating shorter landing trajectory with the landing system of the present invention.

The terms "hovering parachute" or "ascending parachute", as used herein interchangeably, refer to any parachute designed to improve wind drag and reduce oscillation (swinging back and forth) and violent turns during descent. Non-limiting examples of designs are cruciform parachutes, annular and pull-down apex parachutes, rogallo-wing parachutes, ribbon and ring parachutes, and ram-air parachutes.

The term "latching element", as used herein, refers to any type of element or structure capable of latching onto or otherwise engaging with a receiving latch, including but not limited to: a hook, a clip, a clasp, a fastener, a magnet, and the like.

The term "receiving latch", as used herein, refers to any type of element or structure capable of being latched onto or otherwise engaged by a latching element, including but not limited to: a cable, a cable loop, a magnet, a wire, and the like.

The terms "rod" and "cable support", and any variations thereof, are used herein interchangeably to refer to any type of structure for supporting a receiving cable at a certain location, height, and orientation relative to the landing body, to enable the latching or engagement of the hook with the receiving cable or receiving latch. For example, the rod may be: a post, a pole, a tree, and the like. In certain embodiments, the location of the cable support is selected separated from the rest of the other components of the system and there makes latching to the receiving cable so to avoid obstacles present in straight approach of the UAV.

The term "cable release/retraction mechanism", and any variations thereof, as used herein, refers to any type of device or mechanism operative for retracting and releasing (e.g., winding and unwinding) the cable at a particular controllable speed, and/or otherwise controlling the tension of a cable, as desired. For example, the cable release/retraction mechanism may be: a winch, such as a mechanical, electric, hydraulic, pneumatic, or manually-operated winch; a grip hoist; a ratchet and pawl assembly; and the like. Correspondingly, the terms "retract" and "release", and any variations thereof, as used herein, refer to the operations of winding/reeling in the cable, and unwinding/reeling out the cable, respectively.

In certain embodiments, the present invention provides a Point Take-Off (launching) and Landing (recovery) (PTOL) system for mounting onto a base vehicle configured to enable take-off and landing of a flying object from/onto said base vehicle. The flying object is equipped with a suspension cable, adapted to be suspended from said flying object; and a latching element, coupled with said suspension cable. Said system comprises: (i) two launch and recovery arm assemblies, one positioned on one side of the base vehicle, and the other positioned on the opposing side thereof, each assembly comprising: (a) a main pole optionally having articulated telescopic beams; (b) a receiving latch; (c) a cable release/retraction mechanism operative for releasing and/or retracting said suspension cable or a retraction cable coupled with said latching element; and (d) a secondary crane beam associated with said main pole, and configured to maneuver said flying object (302) relative to said main pole, wherein the secondary crane beam is optionally extendable and/or retractable. The system further comprises (ii) a computer comprising a processor coupled to a memory and interfaces, wherein the memory contains instructions that, when executed by the processor, cause the processor to select one of said two launch and recovery arm assemblies for take-off or landing based on current wind direction and direction of movement of the base vehicle, and shape of the turbulence wake behind the base vehicle, wherein said flying object is guided along a flight trajectory, said flying object approaching said base vehicle such that said latching element latches with the receiving latch located at the selected side of the base vehicle, and the cable release/retraction mechanism associated with said receiving latch engages said suspension cable, following which said cable-release/retraction-mechanism releases and/or retracts said suspension cable and the pole is maneuvered to haul said flying object onto a landing surface at said base vehicle.

In some embodiments, the main pole of the PTOL system according to the invention may be linear or angular; and may be composed of a single unit or multiple identical or different units. In addition, in certain embodiments, the main pole is extendable and/or retractable.

In certain embodiments of the PTOL system of the invention, the main pole is: (i) stabilized, to minimize relative motion of the pole resulting from the motion of said base vehicle; (ii) pivotable about at least one axis; and/or (iii) inclined at an angle to facilitate the latching of said latching element with said receiving latch. In certain embodiments, the inclination of the main pole is designed to enable the flying object landing thereon to easily slide onto (or off it, in case of takeoff) the landing surface.

In further embodiments, each one of the main poles of the PTOL system comprises said landing surface, which is pivotable about at least one axis.

According to the PTOL system of the invention, the computer selects the appropriate launch and recovery arm assembly according to the following parameters: wind direction, direction and speed of the base vehicle; and shape of the turbulence field behind the base vehicle; etc.

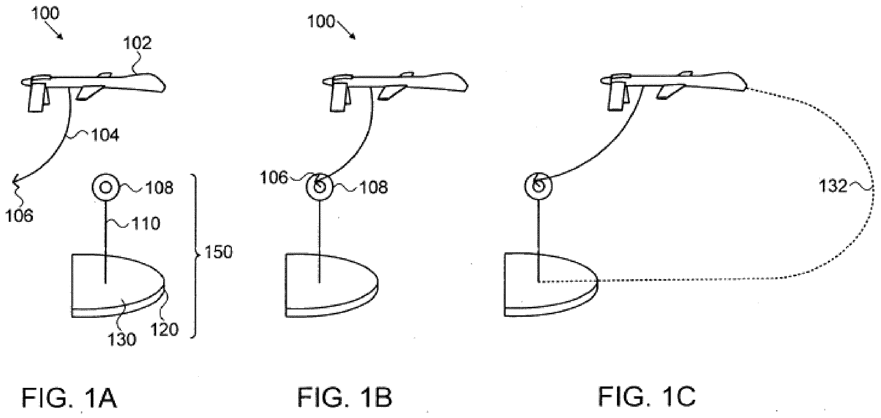

Reference is now made to Fig. 1A, which is a schematic illustration of a UAV landing system, generally referenced 100, with a UAV, referenced 102, approaching a desired landing point, l. UAV 102 flies overhead and towards a landing surface 130 on a ship 120. UAV landing system 100 generally includes a UAV 102 and a landing component 150. UAV 102 includes a suspension cable 104 and a hook 106. Suspension cable 104 is coupled with hook 106, and is suspended from UAV 102 in preparation for landing. Landing component 150 includes a landing surface 130, a rod 110, and a receiving latch 108. Receiving latch 108 is situated at the end of rod 110, which is mounted onto landing surface 130.

Reference is now made to Fig. 1B, which is a schematic illustration of a subsequent stage of the UAV landing system of Fig. 1A, in which the hook latches onto the receiving latch. As UAV 102 flies above landing component 150, hook 106 latches onto receiving latch 108, such that they are securely engaged with one another. Hook 106 represents an exemplary latching element, while other types of latching elements may be utilized instead.

Reference is now made to Fig. 1C, which is a schematic illustration of a subsequent stage of the UAV landing system of Fig. 1A, in which the UAV is guided toward the landing surface along a desired landing path. Once hook 106 latches onto receiving latch 108, a cable release/retraction mechanism (not shown) is activated, enabling UAV 102 to continue its flight path while being guided towards landing surface 130 along a landing path 132. Landing path 132 is depicted in Fig. 1C as substantially semi-elliptical in shape, however alternative landing path shapes or configurations are also applicable. It is also appreciated that the UAV may follow the same landing path, or similar landing path segments, multiple times, such as by repetitively circling around landing surface 130 before landing. During UAV 102 landing, landing system 100 takes into account the ship's motion and the current wind conditions, and may direct UAV 102 to maneuver a certain way and/or to change aerodynamic parameters, such as by deploying flaps or changing engine power settings, in order to effectively guide UAV 102 onto landing surface 130. It is understood that landing surface 130 may alternatively be on a platform other than a ship, for example: a land vehicle (e.g., a truck, or a military vehicle such as a High Mobility Multipurpose Wheeled Vehicle (HMMWV) or an armored personnel carrier), an alternative aquatic vessel (e.g., a boat or a submarine), another aircraft, a stationary location on the ground, and the like. It is also understood that the disclosed technique is also applicable for landing other types of flying objects (besides a UAV), such as a piloted aircraft, or a package, parcel, or other cargo to be delivered. For example, a small aircraft carrying a parcel approaches a landing surface 130 with a landing component 150 (as shown in Fig. 1A), where the parcel includes a suspension cable with a hook (analogous to suspension cable 104 and hook 106). When the aircraft is within sufficient proximity of landing surface 130, the hook latches onto the receiving latch, such that the parcel detaches from the aircraft and is then guided along a landing path onto landing surface 130 (following the same landing process as described hereinabove for UAV 102).

In certain embodiments of the PTOL system of the invention, the base vehicle is an aquatic vessel such as a cruiser or a frigate. In certain embodiments of the PTOL system of the invention, the base vehicle is selected from the list consisting of: a land vehicle; a truck; a military vehicle; a High Mobility Multipurpose Wheeled Vehicle (HMMWV); an armored personnel carrier; an aquatic vessel (such as a boat and a submarine); an aircraft; a moving platform; and a stationary platform.

In certain embodiments of the PTOL system of any of the embodiments above, the flying object is selected from the list consisting of: an unmanned aerial vehicle (UAV); a piloted aircraft; and a package.

UAV landing system 100 may further include a tracking and guidance mechanism, a navigation system, a global positioning system, closed-loop cameras, night vision instruments, and other forms of tracking and communication and control systems known in the art, in order to facilitate the landing (or launching) of UAV 102. UAV landing system 100 may be at least partially automated, and/or may be operated by a human operator (e.g., via relevant controllers, interfaces and/or input devices). Components of such tracking/communication/control systems can reside on the landing surface 130 (e.g., on ship 120), on the flying object (e.g., on UAV 102), and/or at a remote or nearby location (e.g., a control station).

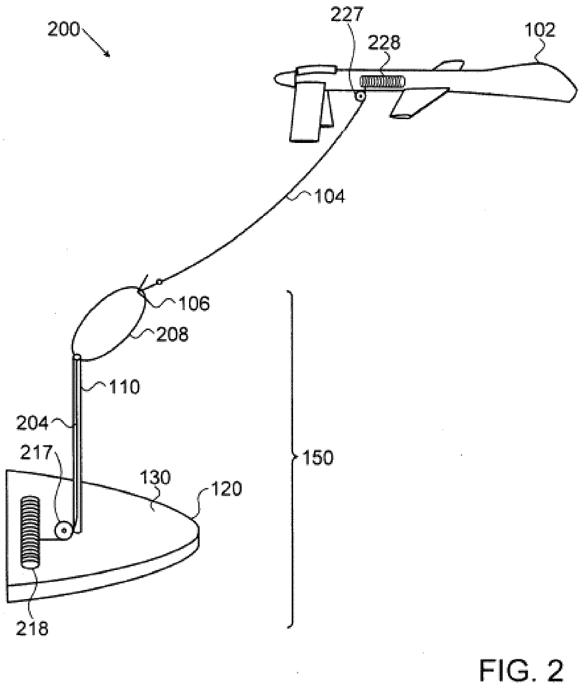

Reference is now made to Fig. 2, which is a close-up schematic illustration of the landing system 100 of Figs. 1A-1C, illustrating cable release/retraction mechanism components. The cable release/retraction mechanism of landing system 100 includes a pulley 217 and winch 218 at the landing surface 130, and a pulley 227 and winch 228 at the UAV 102. Landing system 100 further includes a cable 204, which is spooled around winch 218 and threaded around pulley 217 and forms a loop 208. Loop 208 embodies an exemplary receiving latch 108 (Fig. 1A). Suspension cable 104 of UAV 102 is also spooled around winch 228 and threaded around pulley 227. Referring to Fig. 2, UAV 102 approaches landing surface 130 in such a manner as to enable hook 106 to latch into loop 208. It is noted that hook 106 can generally latch onto a loop 208 more easily as compared to other forms of receiving latches, which may require greater flight accuracy and/or manual intervention to properly position the hook with respect to the receiving latch to ensure that the latching takes place. Cable support 110 may be inclined at a particular angle (e.g., approximately 20° azimuth), and or otherwise configured (e.g., having a particular size and shape), in order to facilitate the latching of hook 106 onto loop 208, by providing a larger tolerance for the UAV approach trajectory that would result in successful latching. Once hook 106 latches onto loop 208, winch 228 is activated to release the required cable length, allowing UAV 102 to continue flying smoothly (e.g., without resulting in an abrupt tug) while now being attached to landing component 150. The latching of loop 208 onto hook 106 triggers at least one winch 218, 228 to release additional cable 204 and 104, respectively, thereby further providing cable slack to enable UAV 102 to continue along its current flight path. Winches 228 and 218 may be controlled by at least one processor, which may be situated at a remote location, on UAV 102, and/or on landing component 150. Gradually, cables 104 and 204 are released at a slower rate such that a gradual pulling force is applied to UAV 102. Eventually winches 218 and 228 begin to retract cables 104 and 204 such that UAV 102 is hauled down onto landing surface 130. Suspension cable 104 and hook 106 may then be fully retracted into UAV 102 (e.g., via winch 218), in order to avoid interfering with system components. After landing, UAV 102 may be secured in place by cable 104, to prevent being inadvertently repositioned or damaged due to strong winds. It is understood that landing system 100 may employ either or both of winches 218 and 228 when retracting or releasing cable 104 and/or cable 204. Pulleys 217 and 227 facilitate smooth retraction and release of cables 104 and 204 via winches 218 and 228. It is understood that a landing system 100 may generally include any number of pulleys and winches in any suitable arrangement or configuration, in order to facilitate the retraction and release of cables 104 and 204 when landing UAV 102. Landing system 100 may also include at least one controller (not shown) for controlling UAV 102 flight operations and/or for controlling the activation/maneuvering of the landing system components (e.g., controlling operation of the cable release/retraction mechanism).

It is appreciated that the landing system of the disclosed technique enables UAV landing to be implemented in adverse weather, such as during strong winds (e.g., 50-70 knots). For example, when landing a UAV in a strong wind, the UAV is initially directed to fly upwind over the landing surface. The UAV continues forward beyond the location of the winch, and the UAV latching element latches onto the receiving latch. The UAV then gradually ascends while decreasing velocity. The UAV may reduce engine power and/or deploy aerial decelerators to assist in decreasing velocity. The UAV drifts backwards (downwind) due to the wind while maintaining a minimum flight speed, and eventually passes back over the landing system location. Subsequently, the UAV can be pulled down and forwards onto the landing surface via retraction of the receiving cable by the winch.

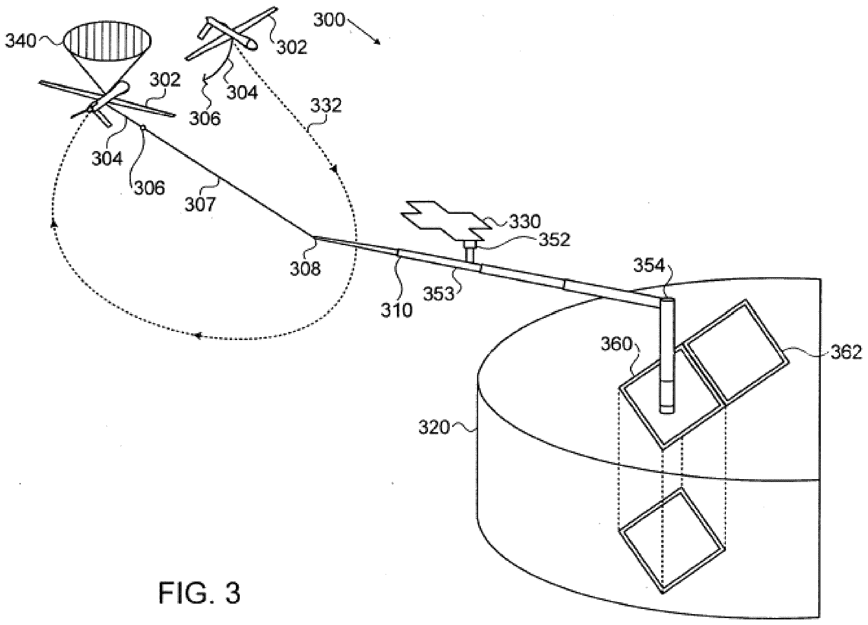

Reference is now made to Fig. 3, which is a perspective view schematic illustration of a UAV landing system, generally referenced 300, for landing a UAV in an aquatic environment, which is not according to the claimed invention. Landing system 300 includes a UAV 302 with a suspension cable 304 and a hook 306. Landing system 300 further includes a ship 320 that includes a receiving latch 308, a beam 310, a receiving cable 307, a winch (not shown), a landing plate 330 and an elevator 360. Beam 310 is a telescopically extendable and retractable rod or pole which projects outwards substantially horizontally from ship 320 (e.g., being coupled perpendicular to another rod that extends vertically above the deck of ship 320, as shown in Fig. 3). Beam 310 may be pivotable about at least one axis (e.g., azimuth and/or elevation). Landing plate 330 is coupled to beam 310, and may also be pivotable about at least one axis (e.g., azimuth and/or elevation) independent of beam 310. Receiving latch 308 is initially coupled at one end of beam 310. UAV 302 may include a parachute 340 and/or alternative aerodynamic or flight control mechanisms, in order to facilitate maneuvering of UAV 302 (e.g., for lowering the stall speed) in preparation for landing.

UAV 302 may follow a flight path 332 when approaching ship 302, to maneuver properly in preparation for landing. When UAV 302 passes over beam 310 with suspension cable 304 hanging downwards, hook 306 engages with and latches onto receiving latch 308. The latching may be facilitated by the size/shape/orientation of beam 310. For example, beam 310 may be inclined forward towards ship's bow at a particular angle (e.g., approximately 20° azimuth), such that suspension cable 304 is guided by the beam 310 to direct hook 306 toward receiving latch 308. In another example, receiving latch 308 may be disposed separately from beam 310, such as being coupled with a second auxiliary beam (not shown) that projects outward from ship 320 adjacent to the main beam 310, while a receiving cable is coupled with receiving latch 208 and an inclined main beam 310, thus facilitating the latching of hook 306 with receiving latch 208 and/or the receiving cable.

After the latching takes place, cable 304 may be reeled inside UAV 302 by a UAV winch (not shown), in order to avoid subsequent interference with other components of landing system 300. It is noted that since beam 310 projects outward over the water, the latching between hook 306 and receiving latch 308 occurs above the water, rather than over the body of ship 320, thereby providing sufficient clearance for the wingspan of UAV 302 while avoiding potential equipment damage and potential injury to the occupants of ship 320.

After the latching between hook 306 and receiving latch 308, beam 310 may telescopically retract (e.g., until point 353), in order to guide UAV 302 towards and onto landing plate 330. Landing plate 330 may be pivoted (e.g., horizontally and/or vertically) about pivot point 352, for adjusting landing plate 330 into a suitable position for contact with UAV 302. Beam 310 may also be pivoted horizontally about pivot point 354. Beam 310 may be telescopically extendable and retractable between points 353 and 354, enabling optimal placement of landing plate 330 for collecting UAV 302. Similarly, the vertical rod coupled to beam 310 (i.e., below point 354) may be retractable or extendable, allowing for the optimal placement of landing plate 330 above the water during the collection of UAV 302, and for lowering landing plate 330 together with UAV 302 onto the deck of ship 320. Once UAV 302 is positioned onto landing plate 330, UAV 102 may be secured in place (e.g., using cable 304 and/or other suitable means). Landing plate 330 is sized, shaped and/or configured to enable the collection and subsequent securing of UAV 302 (e.g., with securing latches). Landing plate 330 may include slots or notches to enable passage of cable 304 and/or cable 307. Subsequently, UAV 302 may undergo any necessary operations, such as refueling or repairs, or may be stowed away.

Beam 310 is substantially stabilized (prevented from substantial motion along pitch, roll, or yaw axes), in order to ensure stable latching of UAV 302 and its subsequent positioning onto landing plate 330, despite potentially large amplitude and rapid angular movements (e.g., roiling, heaving, swaying) experienced by ship 320 during its sailing. Beam 310 may also be used for the launching or takeoff of UAV 302 from ship 320, by incorporating suitable launching mechanisms, such as rails, booster bottles, and the like.

Elevator 360 may be used to stow the landed UAV 302 within the body of ship 320 (e.g., to provide concealment and/or protection from the environment). Once UAV 302 has touched down onto landing plate 330, landing plate 330 may be maneuvered and positioned above elevator 360. Elevator 360 then descends into the body of ship 320, lowering UAV 302, landing plate 330, and other components of landing system 300, such as beam 310, down into ship 320. After being lowered, UAV 302 may be stowed away at a secure location within ship 320. Elevator door 362 may then be closed, restoring the continuity of the body of ship 320.

In certain embodiments of the present invention, the PTOL system further comprises an elevator, operative for transporting said flying object within said base vehicle.

Reference is now made to Figs. 4A, 4B and 4C. Fig. 4A is a perspective view schematic illustration of a ship with a UAV stowage compartment which is not according to the claimed invention. Fig. 4B is a schematic illustration of an initial stage of a UAV landing system, generally referenced 400, for landing a UAV onto the ship of Fig. 4A. Fig. 4C is a schematic illustration of a subsequent stage of the UAV landing system of Fig. 4B, in which the landing components are deployed. Ship 420 includes an interior stowage compartment 460, and a large main side door 462 and a small corner door 463 (seen in Figs. 4B and 4C) that open into stowage compartment 460. UAV landing system 400 of ship 420 includes a landing plate 430 and beam 410, which are analogous to landing plate 330 and beam 310 of UAV landing system 300 (Fig. 3). Beam 410 projects horizontally outward from the side of ship 420, allowing for landing and subsequent passage of a UAV through side doors 462, 463 and into stowage compartment 460. Such a capability may be particularly useful for ships having a high wall surrounding the ship deck, which would cause difficulties for transporting a UAV onto the ship deck after landing. Ship 420 may be a stealth ship, which attempts to minimize radar detection by having an exterior shape and surface that minimizes reflected radar signals, such as being composed of a material that substantially absorbs or deflects radar signals. Thus, it is desirable to maintain the continuity of the exterior surface of ship 420 at all times as possible, to minimize susceptibility to radar detection as well as to provide protection from the environment. Accordingly, in a UAV take-off or landing operation, the main door 462 will close as soon as possible leaving only the smaller door 463 open as long as required to let out the pole of the launch and recovery arm. Otherwise, the doors are maintained in a closed position.

In certain embodiments of the PTOL system of the invention, the base vehicle comprises a stowage compartment, operative for stowing away said flying object (one or more) after said landing.

In further embodiments of the PTOL system the secondary crane beam associated with the main pole 310,may be configured to extract the flying object from the stowage compartment and/or to insert it back in.

Referring to Fig. 4B, in preparation for landing UAV 402, doors 462 and 463 are opened, and beam 410 and landing plate 430 begin to emerge from the side of ship 420 (e.g., by pivoting outwards). Referring to Fig. 4C, beam 410 and landing plate 430 are fully deployed with beam 410 projecting outward horizontally from the side of ship 420, allowing for main door 462 to be closed while only corner door 463 remains opened, to substantially restore the exterior continuity of ship 420.

It is noted that beam 410 generally extends outward a significant distance away from ship 420, which allows UAV 402 to latch onto beam 410 far away from ship 420, minimizing the risk of damage to ship 420 and UAV 402 and avoiding potential injury to the occupants of ship 420. Beam 410 may be automatically or manually stabilized using a stabilization mechanism, to minimize motion of beam 410 as a result of the movements (e.g., pitch, yaw, and roll) of ship 420. Beam 410 may also be raised to ensure that landing plate 430 is maintained at a sufficient height above the water surface.

Reference is now made to Figs. 4D, 4E and 4F. Fig. 4D is a schematic illustration of a subsequent stage of the UAV landing system of Fig. 4B, in which the latching has taken place. Fig. 4E is a schematic illustration of a subsequent stage of the UAV landing system of Fig. 4B, in which the UAV is guided onto the landing plate. Fig. 4F is a schematic illustration of the ship of Fig. 4A, illustrating a landed UAV entering the stowage compartment. As UAV 402 approaches ship 420 for landing, the latching element (not shown) coupled to UAV 402 engages a receiving latch on beam 410 and latches thereto (Fig. 4D). Beam 410 may be inclined forward at a particular angle, in order to facilitate the latching of the latching element with the receiving latch. Subsequently, UAV 402 is guided onto landing plate 430 (Fig. 4E), and is then conveyed into stowage compartment 460 (Fig. 4F), via suitable retraction and maneuvering of beam 410 and landing plate 430. UAV 402 may be properly adjusted and aligned in order to enable UAV 402 to pass through the opening of door 462 and to fit inside stowage compartment 460. After UAV 402 has entered stowage compartment 460, doors 462 and 463 may be closed to restore continuity to the exterior of ship 420. UAV 402 may be stowed away as soon as possible after landing, to minimize susceptibility of ship 420 to radar detection.

Reference is now made to Figs. 4G and 4H. Fig. 4G is a schematic illustration of the ship of Fig. 4A, illustrating a UAV exiting the stowage compartment in preparation for a launch. Fig. 4H is a schematic illustration of the ship of Fig. 4A, illustrating a UAV launching. To enable UAV 402 to exit stowage compartment 460 in preparation for launch (take-off), doors 462 and 463 are opened and then beam 410 is extended, pivoted and maneuvered from within stowage compartment until it projects outwards from the side of ship 420, with UAV 402 positioned on landing plate 430. As soon as UAV 402 has fully exited stowage compartment 460, side door 462 may be closed, leaving only corner door 463 open for beam 410 to pass through. Beam 410 is extended outwards such that landing plate 430 and UAV 402 are positioned above the water surface beyond ship 420. Beam 410 and/or landing plate 430 may also be maneuvered (e.g., rotated) such as to position UAV 402 at a desired elevation angle and a desired azimuth angle (e.g., accounting for current wind conditions) to facilitate its launching. Prior to launch, UAV 402 may start its engine and undergo any requisite pre-flight system checks. Once UAV 402 has launched, side door 462 re-opens (if necessary), beam 410 is retracted and maneuvered back into stowage compartment 460, and then doors 462 and 463 are closed again. It is noted that a different flying object (i.e., other than a UAV) may also be adapted and/or maneuvered as necessary to enable it to be transferred into and out of stowage compartment 460.

In certain examples, the base vehicle comprises at least two doors 462 and 463, through which each one of said main poles 310 is projectable, retractable and/or extendable into and out of said base vehicle, thereby facilitating launch and recovery of UAVs on both sides of the base vehicle as required by the prevailing conditions, thus minimizing limitations, or due to operational preferences.

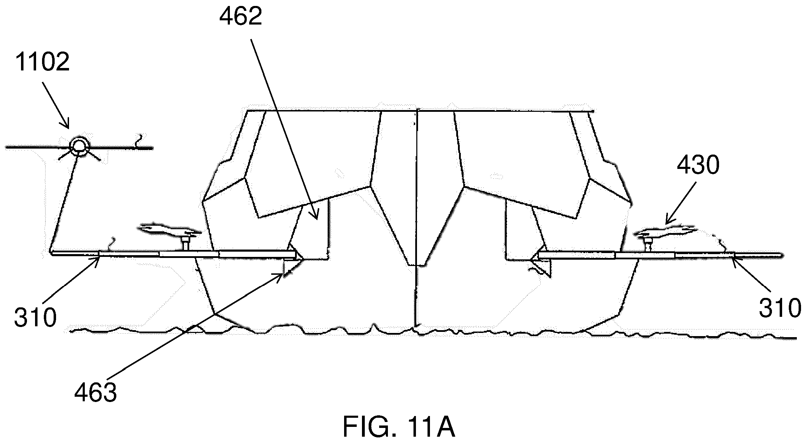

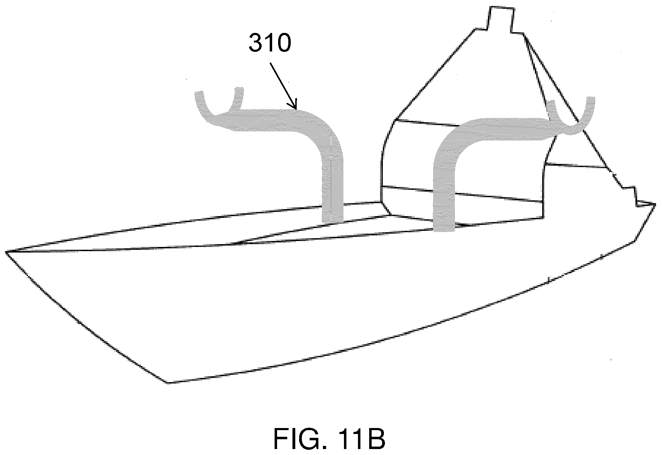

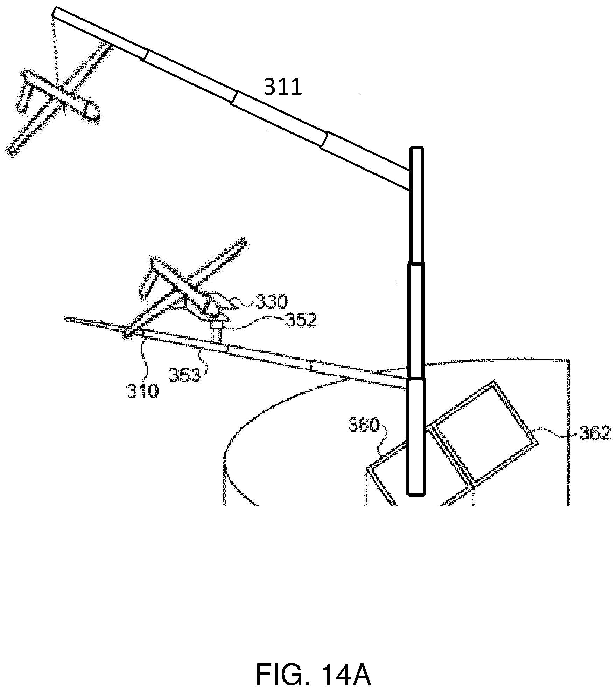

The doors 462 & 463 may be located on the side walls of the base vehicle (see e.g. Fig. 11A) or located at the upper deck thereof (see e.g. Fig. 11B and 362 in Fig. 14A). Notably, when the launch and recovery arm assemblies of the PTOL system are hidden within the body of the base vehicle, the doors 462 & 463 are designed to enable extraction of the arm assemblies to facilitate launching and recovery of the flying object.

In certain embodiments, which are not according to the claimed invention, the base vehicle is a stealth base vehicle and said doors are designed to maintain the stealth capabilities of the base vehicle and minimize exposure thereof.

Reference is now made to Fig. 5A, which is a perspective view schematic illustration of a UAV landing system, generally referenced 500, mounted on a vehicle, for landing a UAV in proximity to high surrounding obstacles, such as trees, which is not according to the claimed invention. UAV landing system 500 generally includes a UAV 502 with a suspension cable 540 and a hook 506, and a vehicle 520 which includes two rods 510A and 510B, a receiving cable 508, pulleys 517A, 517B and 517C, a double-drum winch 518, and a wire bed 530. Vehicle 520 may be any type of land vehicle or mobile platform suitable for carrying the necessary equipment associated with landing system 500, such as for example a truck. Rods 510A and 510B project substantially vertically from vehicle 520, such that the apex of rods 510A, 510B is at least substantially higher than the apex of obstacles, such as trees 560, located in the vicinity of vehicle 520. Rods 510A and 510B are optionally telescopically extendable/retractable and pivotable. Rods 510A and 510B may be anchored to the ground or a nearby fixed structure for support (e.g., via guy-wires). Cable 508 forms a loop between winch 518 and the upper ends of rods 510A and 510B. Cable 508 is threaded around pulleys 517A, 517B and double pulley 517C, enabling the release and retraction of cable 508 along pulleys 517A, 517B and 517C via winch 518. It is understood that Fig. 5A depicts an exemplary cable and pulley configuration, and landing system 500 may include an alternative number of pulleys and/or pulleys that are arranged in an alternative configuration with respect to the receiving cable. UAV 502 is shown approaching vehicle 520 in Fig. 5A, while flying in a downwind direction. It is appreciated that vehicle 520 and the components of UAV landing system 500 are positioned and oriented in accordance with the wind direction, and may be adjusted as necessary if the wind direction changes prior to the UAV landing.

Reference is now made to Fig. 5B, which is a schematic illustration of a subsequent stage of the landing system of Fig. 5A, in which the latching has taken place. As UAV 502 passes over rods 510A and 510B, hook 506 latches onto receiving cable 508. Winch 518 implements controlled cable release/retraction to ensure that UAV continues downwind along its flight trajectory after the latching has occurred.

Reference is now made to Fig. 5C, which is a schematic illustration of a subsequent stage of the landing system of Fig. 5A, in which the UAV is being pulled backwards. Following the latching of hook 506 onto cable 508 and the release of cable 508 via winch 518 (Fig. 5B), the forward motion of UAV 502 is eventually halted and then UAV 502 is gradually pulled backwards upwind by the retraction of cable 508 via winch 518. A parachute 540 (or other suitable mechanism) is optionally deployed from UAV 502 to facilitate the turning around, as well as to enable UAV 502 to hover at a desired altitude under controlled tension from cable 508. The pulling force applied by retracting cable 508 (optionally with parachute 540) causes UAV 502 to turn around (e.g., executing an approximately 180° turn) so that UAV 502 eventually faces upwind as it is being pulled by cable 508.

Reference is now made to Fig. 5D, which is a schematic illustration of a subsequent stage of the landing system of Fig. 5A, in which the UAV has come to rest between the cable supports. UAV 502 is pulled backwards (upwind) by the retraction of cable 508 until UAV 502 is eventually suspended and comes to rest in between rods 510A and 510B.

Reference is now made to Fig. 5E, which is a schematic illustration of a subsequent stage of the landing system of Fig. 5A, in which the UAV has been lowered onto the landing surface. Once UAV 502 is in a suspended position in between rods 510A, 510B (Fig. 5D), rods 510A and 510B are retracted and, if necessary, cable 508 is slightly released, thereby lowering and positioning UAV 502 onto wire bed 530 located on the top of vehicle 520. The use of wire bed 530 is optional, and UAV 502 may alternatively be positioned directly onto a surface of vehicle 520, or onto an alternative landing platform.

It is appreciated that landing system 500 enables the necessary landing operations for UAV 502 (e.g., latching, halting forward motion, hovering and turning around, hauling in) to take place entirely above any obstacles (e.g., entirely above trees 560), avoiding interference of the UAV landing by the obstacles.

Reference is now made to Fig. 5F, which is a schematic illustration of a UAV landing system, generally referenced 540, mounted on a submarine, for landing a UAV in an aquatic environment, which is not according to the claimed invention. UAV landing system 540 is generally analogous to landing system 500 (Figs. 5A-5E), but instead of being mounted onto a land vehicle 520, landing system 540 is mounted onto a submarine 542, to enable point landing of a UAV 502 in an aquatic environment (e.g., a sea or ocean), without the UAV coming into contact with the water, which could result in damage to UAV equipment and components and pose a safety hazard during subsequent flights. Submarine 542 may be partially or fully submerged beneath the water surface 550, while rods 510A and 510B extend upwards from submarine 542 substantially above the water surface 550, to enable the landing operations for UAV 502 (e.g., latching and cable release/retraction operations) to take place entirely above water surface 550. Accordingly, the water surface 550 of the sea or ocean can be considered an obstacle, similar to the trees 560 of Figs. 5A-5E, from which it is desirable to avoid interference during the UAV landing. After UAV 502 has landed using landing system 540 it may be conveyed into submarine 542. It is understood that while rods 510A and 510B are depicted as being aligned substantially parallel to one another in Figs. 5A-5F, rods 510A and 510B may alternatively by disposed in an alternative suitable alignment, such as: a V-form, a canted V-form, and the like, that still allows for the implementation of the aforementioned landing process.

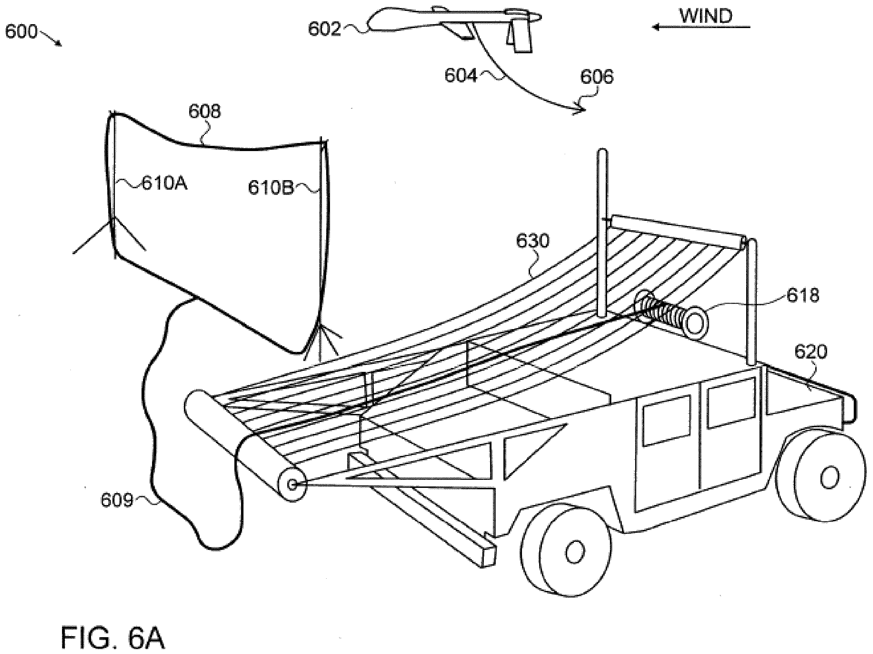

Reference is now made to Fig. 6A, which is a schematic illustration of a UAV landing system, generally referenced 600, for landing a UAV directly onto a land vehicle, in which the UAV is approaching the landing system downwind, which is not according to the claimed invention. UAV landing system 600 generally includes a UAV 602 with a suspension cable 604 and a hook 606, two rods 610A and 610B, a cable loop 608, a cable 609, and a land vehicle 620 which includes a wire bed 630 and a winch 618. Vehicle 620 may be any type of land vehicle suitable for carrying the necessary equipment associated with landing system 600, such as for example a truck. UAV landing system 600 provides point landing of UAV 602 directly onto vehicle 602 (without utilizing a runway and without associated landing preparations). One rod 610A is mounted at a location on the ground beside vehicle 620, while the other rod 610B is mounted on vehicle 620 (alternatively, both rods 610A, 610B may be mounted on the ground). Cable loop 608 extends between rods 610A and 610B, and is coupled with cable 609 which is spooled around winch 618. Rods 610A and 610B may extend sufficiently upward in order to enable the landing operations for UAV 602 (i.e., UAV landing approach; hook trajectory, hook latching, and cable release/retraction) to take place entirely above any obstacles located in the vicinity. The locations of rods 610A and 610B may also be adjusted in accordance with current landing conditions, such as the wind conditions (e.g., the rods may be positioned such that cable loop 608 is substantially perpendicular to the wind direction to facilitate latching).

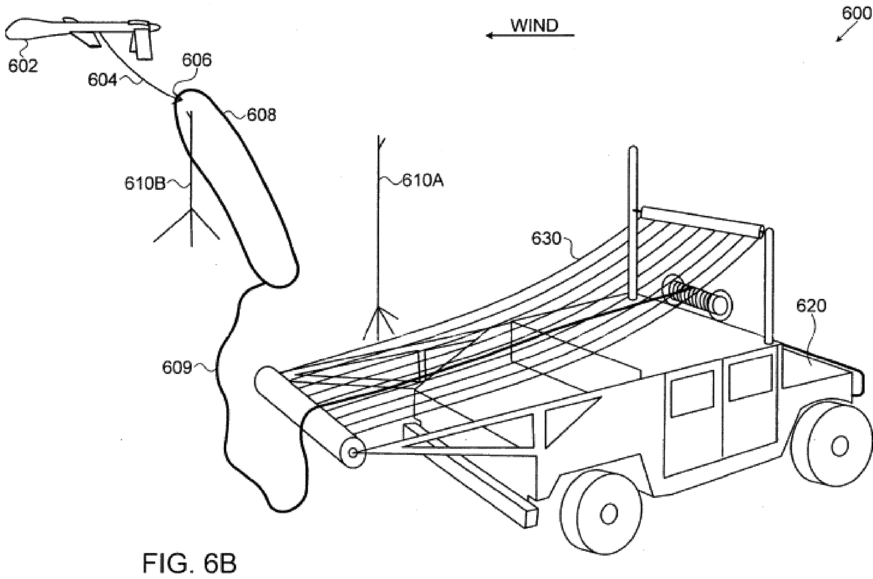

Reference is now made to Fig. 6B, which is a schematic illustration of a subsequent stage of the landing system of Fig. 6A, in which the latching has taken place. As UAV 602 passes downwind over rods 610A and 610B, hook 606 latches onto cable loop 608. Rods 610A, 610B and cable loop 608 may be aligned or configured in such a way as to facilitate the latching with hook 606 (i.e., allowing for larger deviations in the UAV flight trajectory during the latching approach). Since cable loop 608 is situated away from vehicle 620 (rather than directly above vehicle 620), hook 606 will not pass over vehicle during the landing approach, minimizing potential equipment damage and safety risks. After the latching, cable loop 608 undergoes tension and may subsequently detach from rod 610A and/or rod 610B (e.g., cable loop 608 may be coupled with rods 61 OA, 610B in a manner that results in quick detachment). Winch 618 implements controlled cable release/retraction to allow UAV 602 to continue along its flight trajectory after the latching has occurred. In particular, UAV 602 ascends while progressing downwind.

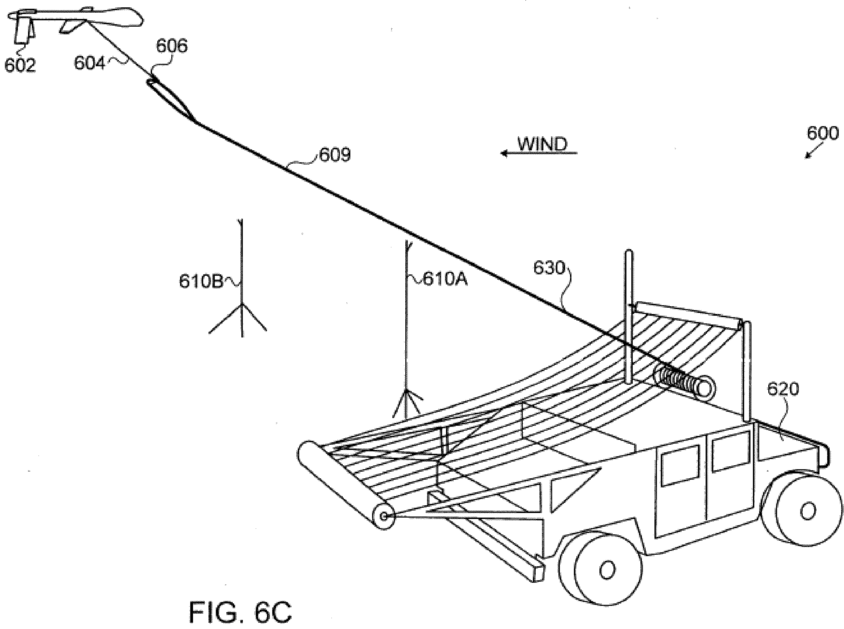

Reference is now made to Fig. 6C, which is a schematic illustration of a subsequent stage of the landing system of Fig. 6A, in which the UAV is being pulled upwind. Following the latching and release of cable 609 as UAV 602 ascends and continues downwind (Fig. 6B), winch begins retracting cable 609, gradually pulling UAV 602 backwards (upwind) and causing UAV 609 to turn around from its initial trajectory until it is eventually facing the upwind direction (i.e., executing an approximately 180° turn). While being pulled by cable 609, UAV 602 maintains a minimum flight speed (e.g., at least above the stall speed) and a controlled flight altitude. UAV 602 may optionally deploy aerodynamic lift/drag augmentation mechanisms, such as a parachute, to facilitate the turning around maneuver (due to the natural tendency of the parachute to align with the pulling force axis of the retracting cable), as well as to enable UAV 602 to hover at a desired altitude. It is noted that a parasail canopy is a particularly useful type of parachute for facilitating the turning around of the UAV due to its natural directional alignment with the wind (as opposed to a parafoil type parachute). UAV 602 is gradually lowered onto wire bed 630 by the retraction of cable 609. UAV 602 may alternatively be positioned (i.e., touchdown) directly onto a surface of vehicle 620, or onto an alternative landing platform (i.e., rather than onto wire bed 630). After landing, UAV 602 is optionally secured to vehicle 620 (e.g., using cable 609 and other suitable means), to avoid the UAV 602 inadvertently being repositioned or damaged due to strong winds.

A UAV may alternatively undergo a "tail-first" landing in accordance with the disclosed technique, in which the retracting cable does not cause the UAV to turn around to face the opposite direction from its initial flight trajectory (as depicted in Fig. 6C), but rather the UAV is pulled backwards while still facing the same direction. For example, if the UAV approaches the landing body downwind to execute the landing, then a tail-first landing would involve the UAV being hauled down onto the landing body while the front (i.e., the "nose") of the UAV remains facing downwind. A tail-first landing may result if the UAV does not deploy a parachute at the appropriate time (i.e., around the peak of its ascent, prior to the initiation of the cable retraction,) or if a deployed parachute does not sufficiently assist the UAV to execute a full U-turn. Further alternatively, tail-first landing may result if the parachute is oriented in a manner that would cause the UAV to be pulled backwards by the retracting cable without turning, such as for a parasail, having its slotted lower rear portion oriented toward the front (nose) of the UAV. A head-first landing may be preferable, since the ordinarily thin tail surfaces are typically more delicate when touching down as compared to leading-edge surface that are normally rounded and more rigid. A tail-first landing may be implemented when it is desired to subsequently launch the UAV toward a direction opposite the direction of the initial UAV flight trajectory.

In certain embodiments of the PTOL system according to the invention, the flying object follows at least one flight trajectory, in accordance with a selected landing scenario. In such embodiments, the flight trajectory is selected from the list consisting of: approaching said base vehicle upwind; flying along a direction that is transverse to the wind direction or to the motion of said base vehicle; repetitively flying back and forth that is transverse to the wind direction or to the motion of said base vehicle; ascending and then gradually descending; repetitively ascending and descending; and a flight maneuver that extends the flight duration of said flying object, such that wind drift results in a lag between said flying object and said base vehicle that enables effective hauling down of said flying object onto said base vehicle by said receiving cable.

In yet further embodiments, which are not according to the claimed invention, the selected landing scenario is based on at least one characteristic selected from the list consisting of: parameters at the vicinity of said base vehicle; parameters of said flying object; parameters of said base vehicle; and current operational characteristics of components of said PTOL system. In more specific embodiments, the PTOL system further comprises or is associated with at least one measuring instrument, operative for acquiring at least one of said parameters.

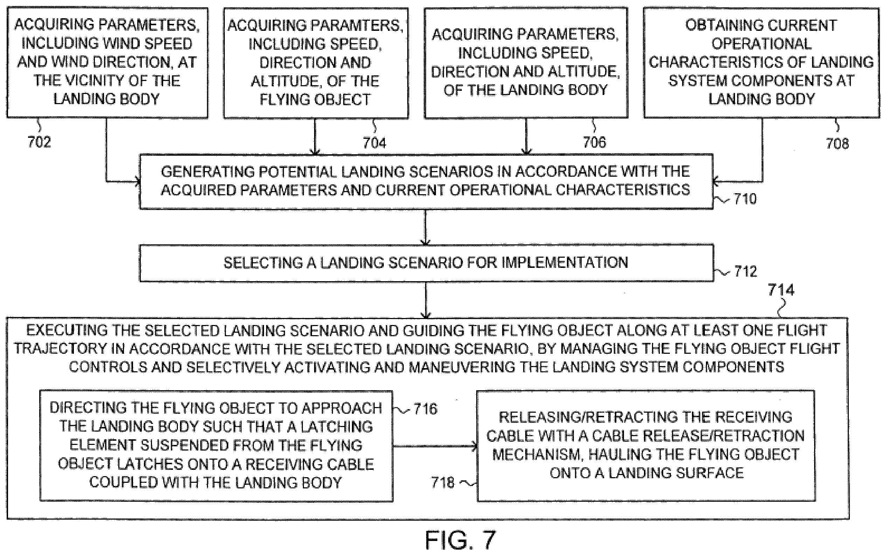

Reference is now made to Fig. 7 which is a flow diagram of a method for landing a flying object onto a landing surface at a landing body, operative in accordance with the claimed invention. In procedure 702, parameters, including the wind speed and the wind direction, at the vicinity of the landing body are acquired. With reference to Fig. 1A, the wind speed, wind direction, and other relevant parameters at the vicinity of the landing body (e.g., ship 120) are acquired prior to the intended landing of a flying object (e.g., UAV 102). Other relevant parameters may include: current weather conditions (e.g., rain, fog); information regarding wind turbulence; information about the landing terrain, including potential obstacles; information about the state of a body of water (e.g., a sea) when landing on an aquatic vessel, such as the height and direction of waves and the speed and direction of water currents; information about the quality of the landing terrain when landing on a land vehicle, such as a paved road or off-road area; and the like. The parameters may be acquired using suitable measuring instruments and detectors located at or on the landing body or in the general vicinity. Alternatively, the parameters may be obtained from external sources via a data network, or may be input manually by a system operator.

In procedure 704, parameters, including the speed, direction and altitude, of the flying object, are acquired. With reference to Fig. 1A, the speed, direction, and altitude of UAV 102 are acquired, along with any other relevant parameters (e.g., its current position relative to landing component 150). The parameters may be acquired using suitable measuring instruments and detectors at UAV 102, or may be input manually by a system operator. Variations in different types of UAVs (e.g., different UAV models) may be accounted for when acquiring the UAV parameters.

In procedure 706, parameters, including the speed, direction and altitude, of the landing body, are acquired. With reference to Fig. 1A, the speed, direction, and altitude of ship 120 are acquired, along with any other relevant parameters. The parameters may be acquired using suitable measuring instruments and detectors at ship 120, or may be input manually by a system operator.

In procedure 708, current operational characteristics of the landing system components at the landing body are acquired. Referring to Fig. 2, the operational characteristics of the various elements of landing component 150 are obtained, such as the characteristics of cable support 110, receiving latch 108, and cable release/retraction mechanism (pulleys 217, 227 and winches 218, 228). The various characteristics may include: position, availability, maximum cable extension length, maximum cable tensile strength, and other suitable parameters.

It is also disclosed a point take-off and landing (PTOL) system for a base vehicle, which is not according to the claimed invention, enabling take-off and landing of a flying object equipped with suspension cable, adapted to be suspended from said flying object; and a latching element, coupled with said suspension cable, said system enables landing of the flying object onto the base vehicle when obstacles are located in proximity to the designated landing area, said system comprising: (i) two launch and recovery assemblies, one positioned on one side of the base vehicle, and the other positioned on the opposing side thereof, each assembly comprising: (a) a cable support; (b) a receiving cable supported by said cable support; (c) a cable release/retraction mechanism coupled with said receiving cable and said suspension cable, operative for retracting said suspension cable and/or a retraction cable coupled with said latching element; and (d) a cable retraction mechanism; and (ii) a computer comprising a processor coupled to a memory and interfaces, wherein the memory contains instructions that, when executed by the processor, cause the processor to select one of said two launch and recovery assemblies for take-off or landing based on: current wind direction, direction of movement of the base vehicle, and shape of the turbulence wake behind the base vehicle, wherein said cable support places the receiving end of said receiving cable in a location far from any obstacles present on said base vehicle, thereby enabling guiding said flying object along a flight trajectory that avoids said obstacles and enables latching of said latching element with the receiving cable without endangering the flying object and/or the base vehicle, following which the respective cable retraction mechanism retracts said receiving cable, hauling said flying object onto a landing surface at said base vehicle.

In certain embodiments, which are not according to the claimed invention, the latching element of the flying objects first latches onto the receiving end of said receiving cable at the cable support, and then the connection is passed to a receiving cable for hauling the flying object to a landing surface/plate/area located at the relative side of the flight trajectory, following which the respective cable retraction mechanism retracts said receiving cable, hauling said flying object onto a landing surface at said base vehicle.

It should be noted that the location, length and angle of each cable support is determined according to the structure of the base vehicle and the various structures and obstacles thereon. Notably, the purpose of the cable support is to enable easy and safe latching trajectory for the flying object without risking the base vehicle and the flying object. After the cable of the flying object latches onto the receiving cable at the cable support, the flying object can be safely hauled onto the base vehicle onto the landing surface. Notably, the landing surface and the support cable may be far from one another. In certain embodiments, both cable support assemblies share a single landing surface onto which the flying object is hauled onto.

In certain embodiments, which are not according to the claimed invention, each cable support is inclined at an angle, to facilitate the latching of said latching element with the respective receiving cable; and/or is extendable and/or retractable.

In certain embodiments of the PTOL system of the invention, each one of said launch and recovery assemblies further comprises a receiving latch coupled with said receiving cable, wherein each receiving latch operative for latching with said latching element.

In additional certain embodiments of the PTOL system of the invention, each cable release/retraction mechanism comprises: (i) at least one winch; and optionally (ii) a first winch situated proximal to the relevant cable support and coupled with the relevant receiving cable, and a second winch situated remotely from said cable support and coupled with said receiving cable, wherein said first winch and said second winch are operative to simultaneously retract said receiving cable to pull said flying object down and forwards while slowing down said flying object.

In certain embodiments of the PTOL system of the invention, the flying object is equipped with a ballistic parachute designed to be deployed after (or immediately upon) latching of the suspension cable with one of said two launch and recovery arm assemblies (facilitating rapidly breaking the speed and causing hovering of said flying object), wherein said computer optionally further controls the activation of said ballistic parachute. In specific embodiments, the ballistic parachute is a ballistic ascending parachute.

In further specific embodiments, which are not according to the claimed invention, the deployment of the ballistic parachute together with the retraction of the receiving cable causes said flying object to turn around with respect to an initial trajectory, such that said flying object is facing an opposite direction from said initial trajectory upon landing.

In procedure 710, potential landing scenarios are generated in accordance with the acquired parameters and current operational characteristics. The extent of all possible landing scenarios is generated, e.g., via a processor and/or other components located at the landing body, taking into account all the acquired parameters (i.e., at the vicinity of the landing body, of the flying object, and of the landing body) and taking into account the operational characteristics of the landing system components. For example, each generated landing scenario may include: a set of landing approach parameters for the flying object, such as: flight speed, direction, and altitude; a set of operating parameters for the landing body, such as: travelling speed and direction; and a set of operating parameters for the activation or manipulation of at least one landing component. A generated landing scenario may also include the application of aerial maneuvers for effective utilization of the wind, the deployment of aerodynamic lift/drag augmentation mechanisms, cutting off the engine of the flying object, and the like. The generated scenarios may be presented to a system operator, along with limitations encountered, advantages and disadvantages, recommendations or other relevant information for each scenario. For example, several potential landing scenarios can be presented to an operator, with one option indicated as being most recommended. The landing scenarios and associated data may be updated in real-time based on changes in the acquired parameters or landing system operating characteristics and/or based on operator input.

In procedure 712, a landing scenario is selected for implementation. One of the previously generated landing scenarios is selected for landing the flying object onto the landing body. The selection of the landing scenario may be performed automatically, such as by a processing unit, based on predefined criteria (e.g., the optimal landing scenario that meets required criteria for current landing conditions), and/or based on operator input. For example, an operator may provide feedback to the automated selection unit to influence the landing scenario selection, or the operator may directly select a preferable landing scenario. The operator may also make adjustments to the selected landing scenario, in advance or in real-time. Intervention by the operator may follow from consultation with suitable personnel, such as the ship command crew, regarding certain operational requirements (e.g., a mandatory sailing course).

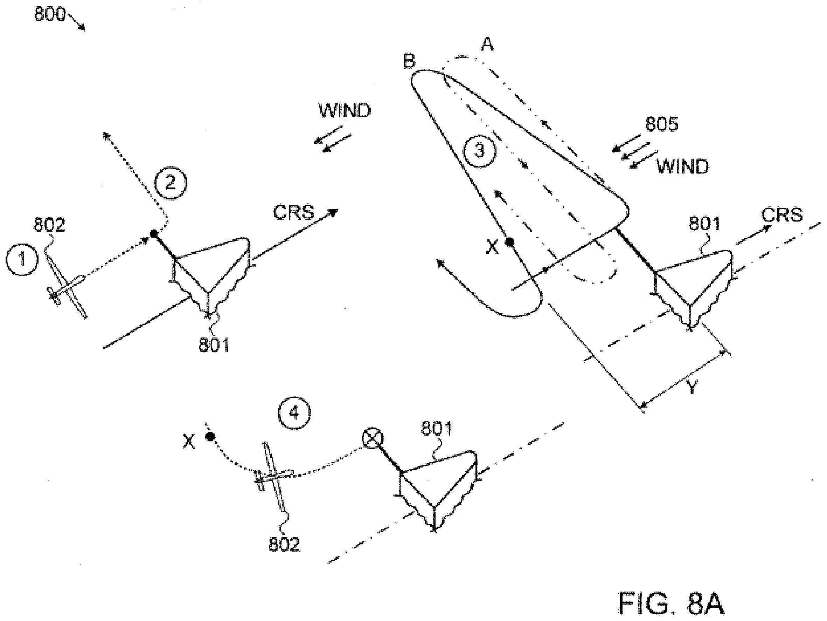

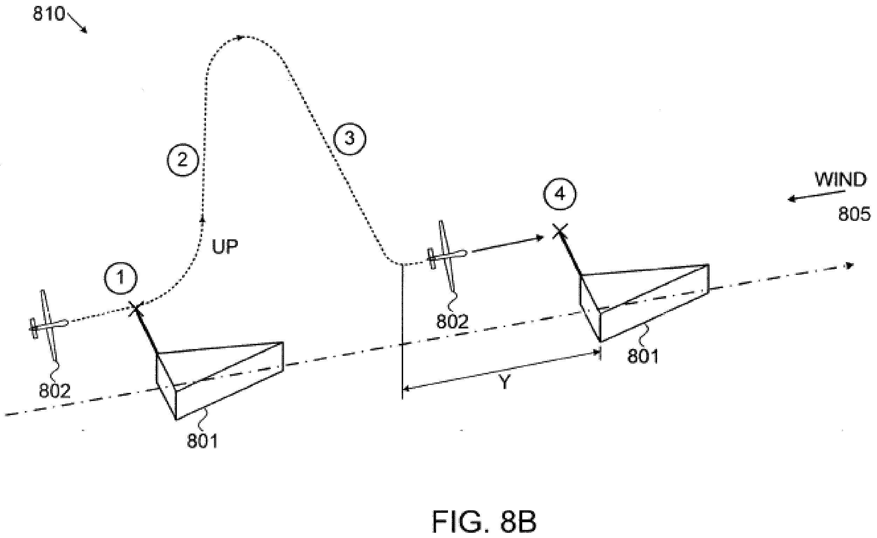

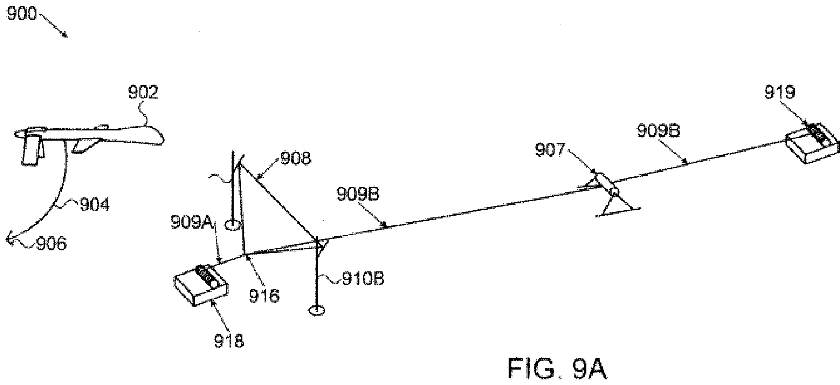

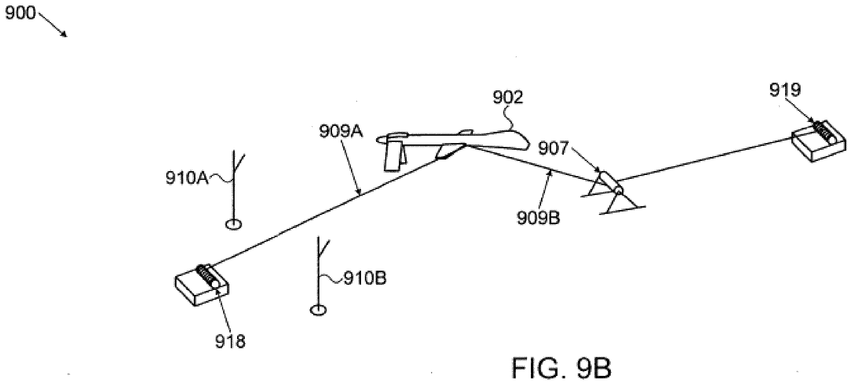

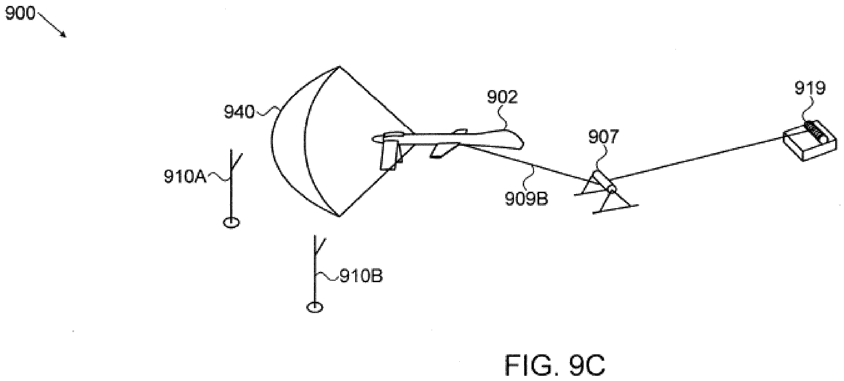

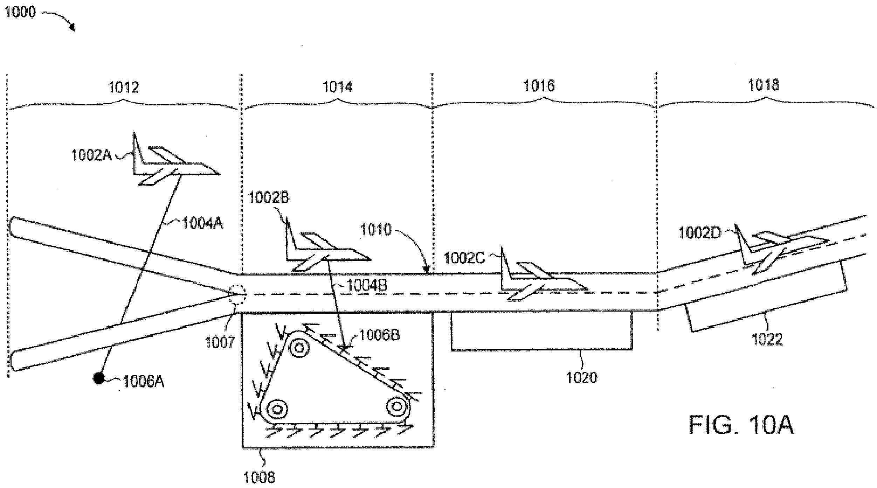

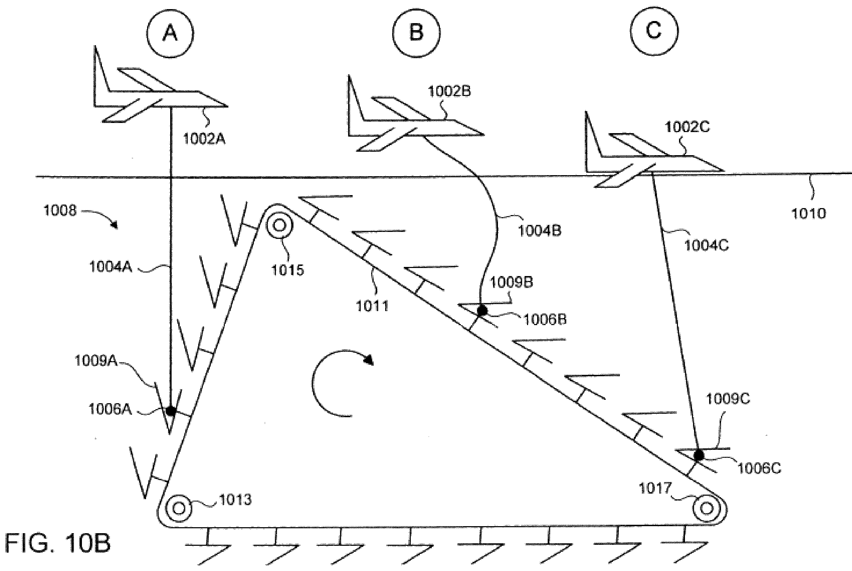

In procedure 714, the selected landing scenario is executed and the flying object is guided along at least one flight trajectory in accordance with the selected landing scenario, by managing the flying object flight controls and selectively activating and maneuvering the landing system components. In particular, the flying object is directed to approach the landing body such that a latching element suspended from the flying object latches onto a receiving cable coupled with the landing body (procedure 716), and the receiving cable is released/retracted with a cable release/retraction mechanism, hauling the flying object onto a landing surface (procedure 718). Referring to Fig. 2, UAV 102 is directed to approach ship 120 until hook 106, suspended from UAV 102 via cable 104, latches onto loop 208 on rod 110 mounted on ship 120. Subsequently, winches 218 and/or 228 are activated to initially release and then gradually retract cables 104 and/or 204, affecting the flight paths of UAV 102 and eventually hauling UAV 102 onto landing surface 130 on ship 120. While following the landing scenario, UAV 102 may also be controlled or instructed to fly or operate in a certain manner, such as deploying aerodynamic lift/drag augmentation mechanisms, hovering at a desired altitude, initiating a turn, cutting off the engine power, and the like. For example, the executed landing scenario may include the following stages: UAV approaches landing body; cable latching/engagement; UAV ascent; deploying parachute when reaching maximum altitude (peak of ascent); UAV descending and drifting laterally under the effect of the wind; retracting cable to cease UAV descent; stabilizing UAV behind the landing body (e.g., ship); and finally, hauling the UAV down onto landing surface. Another exemplary landing scenario (as described in Fig. 8A) may include the following stages: UAV approaches ship; cable latching/engagement; UAV turning laterally with respect to the ship while ship sails upwind; UAV flying back-and-forth transverse to the wind/ship direction, generating a lag between the UAV and ship (along the direction of ship motion); and cable retraction to haul down the UAV onto the ship landing surface. A further exemplary landing scenario (as described in Fig. 8B) may include the following steps: UAV approaches ship; cable latching/engagement; UAV ascending along a vertical trajectory while the ship sails upwind; UAV descending gradually while undergoing drift; UAV ascending/descending repeatedly, generating a lag between the UAV and ship (along the direction of ship motion); and cable retraction to haul down the UAV onto the ship landing surface. A further exemplary landing scenario (as described in Fig. 3 and Figs. 4A-4H) includes UAV landing and subsequent stowage, as well as UAV take-off, via a side-door and elevator of the ship. Further landing scenarios may involve landing during strong wind conditions, and/or "straight-ahead" UAV landing (as described hereinbelow in Figs. 9, 10A and 10B).

A command and control unit (not shown) may control or provide instructions to the flying object, landing body, and/or landing components. The landing system may include communication systems and mechanisms known in the art (e.g., radio, cellular, satellite, and the like), to communicate with the flying object and/or landing body while implementing the landing scenario. The landing scenario may be altered and adapted in real-time to account for practical considerations and/or changes in current conditions (e.g., changing weather).

In certain embodiments, which are not according to the claimed invention, the PTOL system further comprises a control unit, operative for controlling said flying object, wherein said control unit is optionally controlled-by, or designed to receive commands from, the computer.

It is appreciated that any of the procedures of the method of Fig. 7 may be automated (i.e., executed at least partially using a processor or computer). This provides various advantages as compared with only manual (operator controlled) execution, such as: obtaining data from sensors and landing body equipment and data systems, enabling PTOL in a wider variety of environments and conditions; faster operation; the ability to consider a large number of variables and to calculate additional landing scenarios; the ability to prepare landing system components to operate with different types of flying objects (e.g., different UAVs having different characteristics); reduced operator training requirements and workload; and limited potential for human error (e.g., due to inexperience, fatigue, stress, and the like).

Reference is now made to Fig. 8A, which is a perspective view schematic illustration of an exemplary landing scenario, generally referenced 800, that utilizes the wind to maneuver the UAV, which is not according to the claimed invention. Landing scenario 800 employs a UAV landing system for landing a UAV 802 onto a ship 801. The UAV landing system includes landing system components and is generally analogous to UAV landing systems disclosed hereinabove. Landing scenario 800 involves exploiting the current wind conditions for maneuvering UAV 802 with respect to ship 801. Landing scenario 800 is illustrated in four stages that progress sequentially over time. In stage 1, ship 801 sails along a course heading opposite the wind direction (referenced 805), i.e., ship 801 is sailing upwind. Meanwhile, UAV 802 flies upwind toward ship 801 at a speed far greater than the ship sailing speed. In stage 2, UAV 802 engages with the landing system on ship 801, by latching a suspended latching element (e.g., hook) with a receiving cable hanging from at least one rod mounted on ship 801. After the latching, UAV 802 turns (e.g., left) to head in a direction transverse to wind direction 805, and the cable release/retraction mechanism of the landing system on ship 801 is activated to begin release/retraction of the receiving cable. In stage 3, UAV 802 is directed to fly back and forth substantially perpendicular to wind direction 805, i.e., in an S-shaped pattern, in multiple flight legs that are transverse to the motion of ship 801. For example, UAV 802 may be maneuvered to follow trajectory A, first flying outward (i.e., away from ship 801), and then making a U-turn and flying back towards ship 801, and so on. However, due to the drift effect of wind 805, the actual trajectory that UAV 802 follows is represented by trajectory B. While UAV 802 follows the aforementioned S-shaped pattern flight maneuvers, ship 801 continues to sail, and hence there is a resultant lag (referenced "Y" in Fig. 8A) along the direction of ship motion between ship 801 and UAV 802. UAV 802 may repeat multiple cycles of the S-shaped pattern flight maneuvers transverse to the motion of ship 801 while maintaining a normal flight speed (i.e., without slowing down), until a sufficient lag is achieved in order to enable the hauling in of UAV 802 via the cable release/retraction mechanism on ship 801. In stage 4, the cable release/retraction mechanism retracts the receiving cable to haul down UAV 802 onto a landing surface on ship 801. It is noted that landing scenario 800 employs a combination of the motion of ship 801, the wind direction 805, and the operation and maneuvering of UAV 802, to enable the effective guidance of UAV 802 along a flight trajectory for landing onto ship 801, without the use of a parachute or other landing accessories.

Reference is now made to Fig. 8B, which is a perspective view schematic illustration of another exemplary landing scenario, generally referenced 810, that utilizes the wind to maneuver the UAV, which is not according to the claimed invention. Landing scenario 810 employs a UAV landing system for landing a UAV 802 onto a ship 801, as with the UAV landing system disclosed in Fig. 8A. Landing scenario 810 also involves exploiting the current wind conditions for maneuvering UAV 802 with respect to ship 801. Landing scenario 800 is illustrated in four stages that progress sequentially over time. In stage 1, UAV 802 approaches ship 801 flying upwind, and engages with the landing system (i.e., latching with the receiving cable). In stage 2, UAV 802 ascends along a vertical trajectory, for a substantial duration, in accordance with the length of the receiving cable coupled with UAV 802 (which may be released further by the winch). The vertical climb naturally slows down the flight speed of UAV 802, while the wind causes UAV 802 to also drift downwind 805. Meanwhile, ship 801 continues along on its course upwind (i.e., heading opposite wind direction 805). In stage 3, UAV 802 descends very gradually (e.g., as slow as possible), while still undergoing drift due to the wind. When UAV 802 reaches a lower altitude, a lag (referenced "Y") results along the direction of ship motion between UAV 802 and ship 801. UAV 802 may repeat multiple cycles of the aforementioned ascent and descent flight maneuver. When the resultant lag is sufficient for enabling the hauling in of UAV 802 via the cable release/retraction mechanism on ship 801, UAV 802 ceases the ascent/descent flight maneuvers. In stage 4, the cable release/retraction mechanism on ship 801 is activated to retract the receiving cable to haul down UAV 802 onto a landing surface on ship 801. It is noted that the ascending and descending of UAV 802 during landing scenario 810 serves to slow down UAV 802, and thus extend its flight duration, so as to increase the wind drift while the forward motion of ship 801 proceeds. The resultant lag enables effective guidance of the UAV 802 onto ship 801 despite the UAV 802 initially overtaking ship 801 after the latching and cable engagement (e.g., if the speed of UAV 802 is greater than that of ship 801 even when factoring in the wind). It is appreciated that landing scenarios 800 and 810 represent exemplary flight maneuvers, and that alternative flight maneuvers may also be employed to utilize the wind for landing the UAV in conjunction with a UAV landing system of the disclosed technique.

Reference is now made to Figs. 9A, 9B and 9C. Fig. 9A is a schematic illustration of a UAV landing system, generally referenced 900, for straight-ahead landing of a UAV, which is not according to the claimed invention. Fig. 9B is a schematic illustration of a subsequent stage of the UAV landing system 900 of Fig. 9A, at which the latching has taken place. Fig. 9C is a schematic illustration of a subsequent stage of the UAV landing system 900 of Fig. 9A, at which a parachute is deployed to decrease the UAV velocity. Landing system 900 is operative for landing a UAV, referenced 902, which includes a suspension cable 904 with a hook 906. Landing system 900 includes a proximal winch 918, a remote winch 919, a receiving cable having two portions 909A and 909B, a pulley 907, a cable loop 908, and a pair of rods 910A and 910B. It is noted that pulley 907, winch 918, and cable portion 909A are optional. Cable portion 909B is coupled with winch 919 and with pulley 907. Cable portion 909A is coupled with winch 918. Cable loop 908 is coupled with cable portions 909A and 909B at connection point 916. Cable loop 908 is supported by rods 910A and 910B in a manner such that hook 906 of UAV 902 can successfully latch onto and engage with cable loop 908. Upon latching of hook 906 with cable loop 908, the resultant tension at receiving cable portions 909A and 909B triggers remote winch 919, which begins retracting receiving cable 909B (i.e., at a rate that is faster than the current flight speed of UAV 902) and gradually hauling down UAV 902. Pulley 907 guides the receiving cable portion 909B as it is being retracted by winch 919, and enforces the landing of UAV 902 onto a touchdown point located prior to remote winch 919. The touchdown point may be at a landing surface, which may include a dedicated cushioning platform (e.g., a wire mesh bed). After hook 906 has latched onto cable loop 908 (Fig. 9B), UAV 902 undergoes a rapid decrease of velocity such that cable 909 has sufficient tension to properly guide UAV 902. This velocity decrease may be achieved by a parachute deployed by UAV 902 (as shown in Fig. 9C) or the use of other types of flight decelerators (e.g., spoilers, a retro rocket), by cutting of the engine of UAV 902, by activating breaks of landing gears upon touchdown, and/or via winch 918 creating additional tension on receiving cable portion 909A in coordination with winch 919 creating tension on receiving cable portion 909B so as to pull UAV 902 down and forwards. It is noted that the pulling force of winch 919 is generally much greater than that of winch 918. UAV 902 may be directed to deploy the parachute at an appropriate time (e.g., upon latching of hook 906 with cable loop 908), to provide sufficient velocity decrease of UAV 902 to enable effective retraction of receiving cable 909 by winch 919 and subsequent UAV 902 landing.

Figs. 9A, 9B and 9C depict a "straight-ahead" landing of UAV 902, in which UAV 902 is landed while constantly facing forward with respect to its landing flight trajectory (i.e., heading along the same direction as the flight trajectory employed during the landing approach), without turning around to face the opposite direction (similar to the "tail-first landing" discussed hereinabove), and while being pulled forward and down (as opposed to being pulled backwards and down, as with the "tail-first" landing). In general, UAV landing system 900 provides a straight-ahead landing by primarily activating remote winch 919 sufficiently quickly in order to retract the receiving cable portion 909B and haul down UAV 902 onto the landing surface, while UAV 902 is simultaneously decelerated (e.g., via parachute 940). Straight-ahead landing may be preferred for heavier UAVs, or when other considerations dictate continuous forward motion during the UAV landing (as with landing system 1000 described hereinbelow).

Reference is now made to Fig. 10A which is a schematic illustration of a landing system, generally referenced 1000, for sequentially landing multiple unmanned flying objects, which is not according to the claimed invention. Landing system 1000 includes a railway, generally referenced 1010, which includes a trap segment 1012, a touchdown region 1014, a maintenance region 1016, and a launching region 1018. Railway 1010 may be mounted onto an aquatic vessel in motion (e.g., a sailing ship), a land vehicle in motion, or onto a stationary platform (e.g., at land, at sea, or airborne). Landing system 1000 further includes a latching mechanism 1008 located at touchdown region 1014, maintenance mechanisms 1020 located at maintenance region 1016, and launching assistance mechanisms 1022 located at launching region 1018. Landing system 1000 is operative for landing unmanned flying objects, such as UAVs 1002. Each UAV 1002 includes a suspension cable 1004 with a latching element 1006 (e.g., a hook). UAV 1002 approaches railway 1010 along a landing approach trajectory towards trap segment 1012. Trap segment 1012 may be embodied by two separate rails of railway 1010, each of which extends outward laterally in a V-shape, defining an angle therebetween, as depicted in Fig. 10A, although trap segment 1012 may alternatively be configured in a different manner. UAV 1002 and/or landing system 1000 may optionally include a global positioning system (GPS) or other type of navigational system that is used to direct UAV 1002 toward trap segment 1012 of railway 1010. Alternatively, UAV 1002 navigation may be remotely controlled at a command/control station.

Referring to Fig. 10A, a UAV 1002A to be landed onto railway 1010 approaches trap segment 1012. UAV 1002A is guided along a landing approach trajectory such that suspension cable 1004A and latching element 1006A are positioned in between the two lateral V-shaped portions of railway 1010 forming trap segment 1012. UAV 1002A continues forward past the intersection between the two lateral V-shaped portions (i.e., intersection point 1007), and continuing along a gap extending through railway 1010 (depicted by a dashed line in Fig. 10A). Latching element 1006A subsequently engages with latching mechanism 1008, coupling UAV 1002A with latching mechanism 1008 via cable 1004A. It is noted that the V-shape of trapping segment 1012 assists in guiding suspension cable 1004A and latching element 1006A toward latching mechanism 1008 to enable successful latching. It is further noted that while the main section of railway 1010 generally includes two rails separated by a gap, to allow suspension cable 1004 of UAV 1002 to pass through while being pulled along by latching mechanism 1008, alternative configurations (e.g., a single main rail) are also applicable provided that UAV can be hauled down onto railway 1010 via latching mechanism 1008 in a similar manner.

Reference is now made to Fig. 10B, which is a detailed view schematic illustration depicting different stages of touchdown in conjunction with the latching mechanism 1008 of the landing system 1000 of Fig. 10A. Latching mechanism 1008 includes a plurality of clasps 1009, which rotate sequentially along a moving chain 101 1 arranged in a triangular-shaped track situated underneath railway 1010 at touchdown region 1014. A plurality of caster wheels (referenced 1013, 1015, 1017) enables the continuous rotation of chain 1011 along the track. It is appreciated that latching mechanism 1008 represents an exemplary mechanism configuration, while alternative latching mechanisms are also applicable in accordance with the disclosed technique. Railway 1010 may include a triggering element (not shown), such as a switch, disposed adjacent to intersection point 1007, which triggers the activation (highspeed rotation) of latching mechanism 1008. The linear velocity of the rotating chain 1011 of latching mechanism 1008 is greater than the velocity of the UAV 1002 during its landing trajectory. As a result of the higher speed rotation of chain 1011, cable 1004 serves to guide UAV 1002 down onto railway 1010, until UAV 1002 comes to a complete stop within touchdown region 1014.

A UAV 1002A is shown in an initial touchdown stage (designated "A"), where latching element 1002A of UAV 1002A has just latched with one of the clasps 1009A located at the inclining portion of chain 1011 (i.e., in between wheels 1013 and 1015) as UAV 1002 reaches the beginning of latching mechanism 1008 (i.e., just beyond intersection point 1007). UAV 1002 may optionally undergo deceleration at this stage, such as by activating aerodynamic braking mechanisms (e.g., rudder splitting, deploying a drag parachute, activating railway friction, and the like) upon command. After latching onto clasp 1009A, latching element 1006A is carried upward by the rotation of chain 1011 toward wheel 1015. A UAV 1002 is shown at a later touchdown stage (designated "B"), at which the latching element 1006B of UAV 1002B was previously latched within clasp 1009B, which is now located at the declining portion of chain 1011 (i.e., in between wheels 1015 and 1017), and the rotation of chain 1011 is pulling cable 1004B down and forward (toward wheel 1017), thereby hauling down UAV 1002B onto railway 1010. A UAV 1002C is shown at yet a later touchdown stage (designated "C"), at which the latching element 1006C of UAV 1002C was previously latched within clasp 1009C, which is now located further along the declining portion of chain 1011 (i.e., in between wheels 1015 and 1017), where the rotation of chain 1011 has pulled cable 1004C sufficiently down and forward such that UAV 1002C has now completed touchdown onto railway 1010. After the landed UAV 1002 has come to a complete stop, the latching element 1006 may detach from clasp 1009. UAV 1002 may then be taken further along railway 1010 toward maintenance region 1016 and/or launching region 1018.

Following the landing of a UAV 1002 onto railway 1010 as described hereinabove, another UAV may follow and land onto railway 1010 in a similar manner. For example, referring back to Fig. 10A, a first UAV 1002D (i.e., in a sequence of multiple UAVs having arrived at landing system 1000) is shown at launching region 1018 preparing for take-off; a second UAV 1002C is shown at maintenance region 1016 after having completed touchdown; a third UAV 1002B is shown during the latching and touchdown stage over touchdown region 1014; while a fourth UAV 1002A is shown along a landing approach trajectory above trap segment 1012.

UAV 1002 may undergo maintenance operations and/or general preparations for an upcoming flight (e.g., servicing, inspection, refueling, rocket booster mounting, and the like) at maintenance region 1016, with use of maintenance mechanisms 1020. UAV 1002 may be stowed away elsewhere on the landing body (e.g., if deemed unserviceable, or if not scheduled for imminent take-off). Following the necessary maintenance/preparations, the UAV 1002 may be brought along runway 1010 toward launching region 1018, where it may then be launched from railway 1010. it is appreciated that the landing of a UAV onto landing system 1000 takes place relatively quickly (i.e., latching mechanism 1008 provides deceleration and touchdown of a UAV 1002 over a relatively short distance along railway 1010), and thus landing system 1000 facilitates the sequential landing of multiple UAVs over a substantially short period of time. It is further appreciated that landing system 1000 essentially implements a straight-ahead UAV landing, similar to landing system 900 described hereinabove (Figs. 9A, 9B and 9C), where the landing UAV 1002 is pulled forward and down onto the landing surface while continuing to face the same direction (i.e., without turning).

Reference is now made to Figs. 11A & 11B illustrating the "two-sided", left & right, launch and recovery arm assemblies. This configuration serves to minimize the operational constraints on the base vehicle, specifically in this case ship's sailing, by allowing it to perform launching and recovering of a UAV on either side of the ship, thereby eliminating the requirement to alter its operationally-needed course and speed. This is done by better matching the airflow around the ship and its vicinity. The airflow comprises of: (a) ship motion-created wind (opposite to ship's sailing vector); (b) open air ambient wind (notably, the combination of (a) and (b) creates the known Wind-On-Deck (WOD) resultant); and (c) turbulent wake created by the ship's superstructure and its hull, generally drifting backwards with the WOD, also depending on its velocity.

Fig. 11A is a schematic illustration of a UAV landing system for landing a UAV 1102 onto the ship, in which the landing components are deployed sideways from the ship's side walls. Optionally, the ship includes an interior stowage compartment. As illustrated, the ship includes a large main side door 462 and a small corner door 463 that optionally open from a stowage compartment. pole 310 projects horizontally outward from the side of the ship, allowing for landing and subsequent passage of a UAV through side doors 462 and further into a stowage compartment. Such a capability may be particularly useful for ships having a high wall surrounding the ship deck, which would cause difficulties for transporting a UAV onto the ship deck after landing. The ship may be a stealth ship, which attempts to be resistant to radar detection by having an exterior shape and surface that minimizes reflected radar signals, such as being composed of a material that substantially absorbs or deflects radar signals. Thus, it is desirable to maintain the continuity of the exterior surface of the ship as often as possible, to minimize susceptibility to radar detection as well as to provide protection from the environment. Accordingly, main door 462 is generally maintained in a closed position and the pole 310 is extended through the small corner door 463: pole 310 and landing plate 430 are fully deployed with pole 310 projecting outward horizontally from the side of the ship, allowing the main door 462 to be closed while only the corner door 463 remains opened, to substantially restore the exterior continuity of the ship.

It is noted that the pole 310 generally extends outward a significant distance away from the ship, which allows the UAV 1102 to latch onto the pole 310 far away from the ship, thereby minimizing the risk of damaging the ship and the UAV 1102 and avoiding potential injury to the occupants of the ship. The pole 310 may be automatically or manually stabilized using a stabilization mechanism, to minimize motion thereof as a result of the movements (e.g., pitch, yaw, and roll) of the ship. The pole 310 may also be raised to ensure that landing plate 430 is maintained at a sufficient height above the water surface.

Fig. 11B is a schematic illustration of an alternative UAV landing system for landing a UAV onto the ship, in which the landing components are deployed upwardly on the ship's deck. Optionally, the UAV landing system is fixed in place. Alternatively, it is foldable / retractable, and accordingly the ship includes an internal stowage compartment from which the UAVs are deployed. This is especially beneficial if the ship is a stealth ship.

An "Arm-thru-Wall" operation option for stealth ship serves to facilitate left & right launching and landing of UAVs from inside a stealth ship's wall-covered internal deck, while keeping the ship's walls envelope as continuous as possible. Prior to any action, e.g. for launching a UAV, the pole will come outside thru an adjacent doors pair, the main one rather big for the passage of the arm while carrying UAV, and a small one; the bigger will quickly close after coming out, leaving but the small form-fitting door open for the arm to protrude outward thru it. Upon end of the action, the bigger door will open shortly to allow the pole (and the UAV on it, as the case is) to return inside, then both doors are closed.

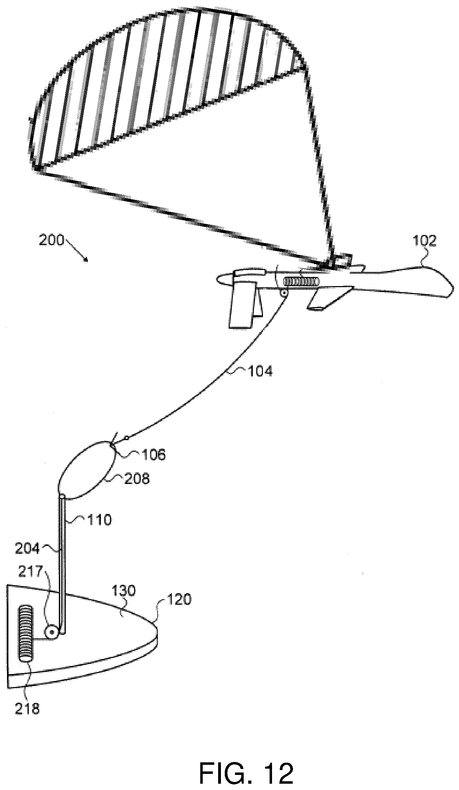

Reference is now made to Fig. 12, which is a close-up schematic illustration of the landing system 200, illustrating cable release/retraction mechanism components. The cable release/retraction mechanism of the landing system 200 includes a pulley 217 and winch 218 at the landing surface 130, which are designed to work in conjunction with a pulley and winch at the UAV 102. The Landing system 200 further includes a cable 104, which is spooled around winch 218 and threaded around pulley 217 and forms a loop 208 that embodies an exemplary receiving latch 108. As illustrated, the UAV 102 approaches the landing surface 130 in such a manner as to enable a hook 106 to latch into loop 208. Notably, the cable support 110 may be inclined at a particular angle (e.g., approximately 20° azimuth), and or otherwise configured (e.g., having a particular size and shape), in order to facilitate the latching of the hook 106 onto loop 208, by providing a larger tolerance for the UAV approach trajectory that would result in successful latching. Once hook 106 latches onto loop 208, the ballistic parachute deploys and the winch(s) is activated to pull the UAV 102 towards the landing surface 130. The winches may be controlled by the computer of the system. After landing, the UAV 102 may be secured in place by the cable 104, to prevent being inadvertently repositioned or damaged due to strong winds. It is understood that landing system 100 may employ either or both of winches when retracting or releasing the cables 104,204. It is understood that the landing system may generally include any number of pulleys and winches in any suitable arrangement or configuration, in order to facilitate the retraction and release of cables 104, 204. The landing system 200 may also include at least one controller for controlling the UAV 102 flight operations and/or for controlling the activation/maneuvering of the landing system components (e.g., controlling operation of the cable release/retraction mechanism).

It is appreciated that the landing system of the disclosed technique enables UAV landing to be implemented in adverse weather, such as during strong winds (e.g., 50-70 knots).

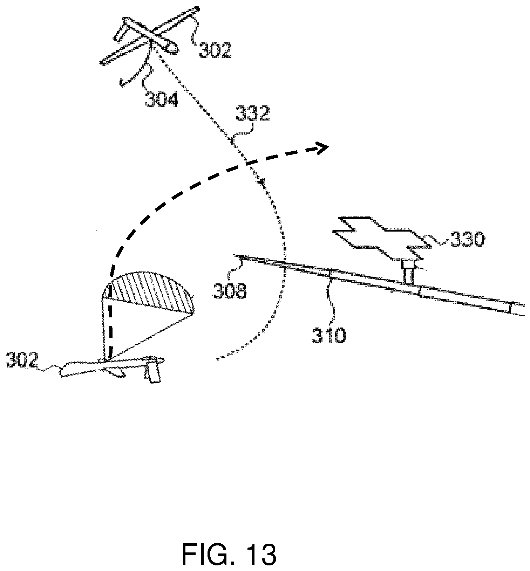

Reference is now made to Fig. 13, which is a close-up schematic illustration retrival of a UAV using the landing system, which is not according to the claimed invention. This figure shows one assembly out of two launch and recovery assemblies of the system, illustrating the main pole 310, the receiving latch 308, and the landing plate 330. As illustrated, essentially immidetly after the suspension cable 304 of the UAV 302 latches onto the receiving cable, the ballistic parachute deploys, which halts the UAV's flight and causes it to fly backwards against its original flight trajectory (due to the pulling forces of the wind and optionally the forward movement of the base vehicle's). Now, the UAV 302 is pulled/hauled down onto the landing plate 330 while the deployed paracheute keeps it in the air. Notably, this recovery procedure is carried out while the main pole 310 is extended to a location far from any obstacles present on said base vehicle, thereby enabling the guidance of said flying object along a flight trajectory and latching of said latching element with the receiving cable without endangering the UAV and/or the base vehicle.

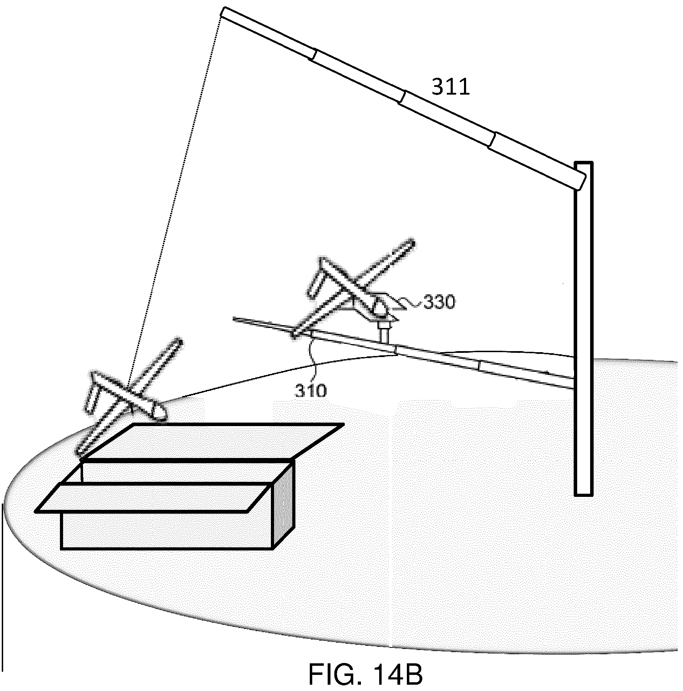

Reference is now made to Figs. 14A and 14B, which are schematic illustration of an above deck landing system comprising a main pole 310 and a secondary crane beam 311, which is according to the claimed invention. As previously illustrated and explained the main pole 310 holds the landing base 330 and is used for recovery and optionally for launching a UAV. The secondary crane beam 311 is used for facilitating handling the UAV on deck, between optional stowage locations, e.g. deck floor or hangar, and the main pole 310.

Fig. 14B further illustrates an over-the-deck approach that includes also a stowage container/compartment that participates in the UAV operation cycles: stowage container opens the secondary crane beam 311 approaches and picks a UAV therefrom after it unlocks, followed by transferring the UAV over deck, and placing onto the main pole for launching. When recovering a UAV, after it has been pulled and secured hoisted onto the landing base 330, the secondary crane beam 311 passes the UAV back to the container for stowage. All these steps and their timing are controlled by the computer of the system.

The configuration of two arms (main pole 310 and secondary crane beam 311) on each launch and recovery arm assembly serves to facilitate: (a) pickup from deck container and or inserting the UAV into it in a process enabling making use of the undercarriage for mounting onto the main beam for the operations of handling/positioning for launching and recovery, while having the landing gears on the drone is a requirement for land operations of ship's UAVs for clients Expeditionary Forces; and (b) stowing more than a single UAV in same container, allowing continuous observation operation over targets performed by same base vessel, which can thus send a UAV to replace its first UAV that is active in flight when its duration capability (e.g. fuel quantity) nears its end.

The point take-off and landing (PTOL) system according to the embodiments above have many additional advantages over known systems and techniques. For instance, it requires minimal crew for its operation, which helps avoiding crew presence outside in the elements/darkness, improves safety for UAV, minimal time required, etc.

In certain embodiments, the present invention further provides an automated method for point landing of a flying object equipped with a ballistic parachute onto a point take-off and landing (PTOL) system as previously described, the method comprising the procedures of: (a) acquiring parameters at the vicinity of a base vehicle, comprising at least the wind speed and the wind direction thereat; (b) acquiring parameters of said flying object comprising at least the speed, direction and altitude thereof; (c) acquiring parameters of said base vehicle comprising at least the speed, direction and altitude thereof; (d) obtaining current operational characteristics of landing system components of said base vehicle; (e) generating potential landing scenarios in accordance with the acquired parameters and current operational characteristics; (f) selecting a landing scenario to implement; and (g) executing the selected landing scenario and guiding said flying object along at least one flight trajectory in accordance with said selected landing scenario, by managing said flying object flight controls and selectively activating and maneuvering said landing system components, comprising: (i) directing said flying object to approach said base vehicle such that a latching element suspended from said flying object latches onto a receiving cable coupled with said base vehicle; (ii) activating said ballistic ascending parachute achieving rather short motion backwards to proper reel-in hauling location; and (iii) releasing and/or retracting said receiving cable with a cable release/retraction mechanism, and hauling said flying object onto a landing surface at said base vehicle.

All the procedures are automated and executed by the computer of the PTOL system.

In certain embodiments of the method of the invention, the at least one flight trajectory is selected from the list consisting of: approaching said base vehicle upwind; flying along a direction that is transverse to the wind direction or to the motion of said base vehicle; repetitively flying back and forth transverse to the wind direction or to the motion of said base vehicle; ascending and then gradually descending; repetitively ascending and descending; and a flight maneuver that extends the flight duration of said flying object, such that wind drift results in a lag between said flying object and said base vehicle that enables effective hauling down of said flying object onto said base vehicle by said receiving cable.

In certain embodiments of the method, which are not according to the claimed invention, the landing scenario comprises at least one operation of said flying object selected from the list consisting of: hovering at a particular altitude; initiating a turn; cutting off engine power; and turning around with respect to an initial trajectory, by the retraction of said receiving cable and the ballistic parachute, such that said flying object is facing an opposite direction from said initial trajectory upon landing.

In certain embodiments of the method, which are not according to the claimed invention, the control unit controls at least one of: said flying object; said base vehicle; and said PTOL system's components.

Referring to Fig. 12, UAV 102 is directed to approach a base vehicle until hook 106, suspended from UAV 102 via cable 104, latches onto loop 208 on rod 110 mounted on the ship. Subsequently, a ballistic ascending parachute is deployed and the winches are activated to haul the UAV 102 onto the landing surface 130 on the ship. While following the landing scenario, UAV 102 may also be controlled or instructed to fly or operate in a certain manner, such as hovering at a desired altitude, initiating a turn, cutting off the engine power, and the like. For example, the executed landing scenario may include the following stages: UAV approaches landing body; cable latching/engagement; UAV ascent; UAV engine stop and parachute deployment; descending and drifting laterally under the effect of the wind; retracting cable to cease UAV descent; and stabilizing UAV behind the landing body (e.g., ship).

A further exemplary landing scenario includes UAV landing and subsequent stowage, as well as UAV take-off, via a side-door (as illustrated in Fig. 13) and elevator of the ship. Further landing scenarios may involve landing during strong wind conditions, and/or "straight-ahead" UAV landing (as described hereinabove).

It will be appreciated by persons skilled in the art that the technique is not limited to what has been particularly shown and described herein above.

## Claims

1. A point take-off and landing (PTOL) system (300) for mounting onto a base vehicle (320) configured to perform take-off and landing of a flying object (302) from/onto said base vehicle (320), wherein the system (300) comprises:
i. two launch and recovery arm assemblies, one configured to be positioned on one side of the base vehicle (320), and the other configured to be positioned on the opposing side thereof, each assembly comprising:
(a) a main pole (310);
(b) a receiving latch (308);
(c) a cable release/retraction mechanism; and
(d) a secondary crane beam (311) associated with said main pole (310), and configured to maneuver said flying object (302) relative to said main pole (310), wherein the secondary crane beam (311) is optionally extendable and/or retractable; and
ii. a computer comprising a processor coupled to a memory and interfaces, wherein the memory contains instructions that, when executed by the processor, cause the processor to select one of said two launch and recovery arm assemblies for take-off or landing of said flying object (302) based on current wind direction and direction of movement of the base vehicle (320), and shape of the turbulence wake behind the base vehicle (320),
wherein:
- the flying object (302) is equipped with: a suspension cable (304) with a latching element (306);
- each cable release/retraction mechanisms is configured for releasing and/or retracting said suspension cable (304) coupled with said latching element (306); and
- the flying object (302) is configured to approach the base vehicle (320) such that the latching element (306) latches with the receiving latch (308) located at the selected side of the base vehicle (320) and the cable release/retraction mechanism associated with the receiving latch (308) is configured to engage the suspension cable (304).

2. The PTOL system (300) according to claim 1, comprising a flying object (302) wherein said flying object (302) is equipped with a ballistic parachute (340) configured to be deployed immediately upon latching of the suspension cable (304) with one of said two launch and recovery arm assemblies, wherein said computer controls the activation of said ballistic parachute (340), wherein said ballistic parachute (340) is optionally a ballistic ascending parachute.

3. The PTOL system (300) according to claim 1 or 2, wherein each of said main poles (310) is: (i) extendable and/or retractable; (ii) stabilized, to minimize relative motion of the main pole (310) resulting from the motion of said base vehicle (320); (iii) pivotable about at least one axis; and/or (iv) inclined at an angle to facilitate the latching of said latching element (306) with said receiving latch (308).

4. The PTOL system (300) according to any one of claims 1-3, comprising a base vehicle, wherein said base vehicle (302) is an aquatic vessel.

5. The PTOL system (300) according to any one of claims 1-4, wherein each one of the main poles (310) comprises a landing surface (330), which is pivotable about at least one axis.

6. The PTOL system (300) according to any one of claims 1-5, further comprising an elevator (360), operative for transporting said flying object (302) within said base vehicle (320), wherein said base vehicle (320) optionally comprises a stowage compartment (460), operative for stowing away said flying object (302).

7. The PTOL system (300) according to any one of claims 1-6, comprising a base vehicle, wherein:
(i) said base vehicle (320) is selected from the list consisting of:
• a land vehicle;
• a truck;
• a military vehicle;
• a High Mobility Multipurpose Wheeled Vehicle (HMMWV);
• an armored personnel carrier;
• an aquatic vessel (such as a boat and a submarine);
• an aircraft; and
• a moving platform; and
(ii) said flying object (302) is selected from the list consisting of:
• an unmanned aerial vehicle (UAV);
• a piloted aircraft; and
• a package.

8. The PTOL system (300) according to any one of claims 1-7, comprising a flying object (302), wherein said flying object (302) is configured to follow at least one flight trajectory, in accordance with a selected landing scenario, wherein said at least one flight trajectory is selected from the list consisting of:
• approaching said base vehicle upwind;
• flying along a direction that is transverse to the wind direction or to the motion of said base vehicle;
• repetitively flying back and forth that is transverse to the wind direction or to the motion of said base vehicle;
• ascending and then gradually descending;
• repetitively ascending and descending; and
• a flight maneuver that extends the flight duration/trajectory of said flying object, such that wind drift acting thereon results in a lag between said flying object and said base vehicle that enables effective hauling down of said flying object onto said base vehicle by said receiving cable.

9. An automated method for point landing of a flying object equipped with a ballistic parachute onto a point take-off and landing (PTOL) system (300) according to any one of claims 1 to 8, wherein the method comprises the steps of:
a. acquiring (702) parameters at the vicinity of a base vehicle, comprising at least the wind speed and the wind direction thereat;
b. acquiring (704) parameters of said flying object comprising at least the speed, direction and altitude thereof;
c. acquiring (706) parameters of said base vehicle comprising at least the speed, direction and altitude thereof;
d. obtaining (708) current operational characteristics of landing system components of said base vehicle;
e. generating (710) potential landing scenarios in accordance with the acquired parameters and current operational characteristics;
f. selecting (712) a landing scenario to implement; and
g. executing (714) the selected landing scenario and guiding said flying object along at least one flight trajectory in accordance with said selected landing scenario, by managing said flying object flight controls and selectively activating and maneuvering said landing system components, comprising:
i. directing (716) said flying object to approach said base vehicle such that a latching element suspended from said flying object latches onto a receiving cable coupled with said base vehicle;
ii. activating said ballistic parachute; and
iii.releasing and/or retracting (718) said receiving cable with a cable release/retraction mechanism, and hauling said flying object onto a landing surface at said base vehicle.

10. The method according to claim 9, wherein said at least one flight trajectory is selected from the list consisting of:
• approaching said base vehicle upwind;
• flying along a direction that is transverse to the wind direction or to the motion of said base vehicle;
• repetitively flying back and forth transverse to the wind direction or to the motion of said base vehicle;
• ascending and then gradually descending;
• repetitively ascending and descending; and
• a flight maneuver that extends the flight duration of said flying object, such that wind drift results in a lag between said flying object and said base vehicle that enables effective hauling down of said flying object onto said base vehicle by said receiving cable.

## Patentansprüche

1. Ein Punktstart- und Lande-System (PTOL) (300) zur Montage auf einem Basisfahrzeug (320), das so konfiguriert ist, dass es das Starten und Landen eines Flugobjekts (302) von/auf dem Basisfahrzeug (320) durchführt, wobei das System (300) umfasst:
i. zwei Start- und Bergungsarmbaugruppen, von denen eine so konfiguriert ist, dass sie auf einer Seite des Basisfahrzeugs (320) positioniert werden kann, und die andere so konfiguriert ist, dass sie auf der gegenüberliegenden Seite davon positioniert werden kann, wobei jede Baugruppe umfasst:
(a) einen Hauptmast (310);
(b) eine Aufnahmeverriegelung (308);
(c) einen Kabelauslöse-/Einziehmechanismus; und
(d) einen sekundären Kranbalken (311), der mit dem Hauptmast (310) verbunden ist und dazu ausgelegt ist, das Flugobjekt (302) relativ zum Hauptmast (310) zu manövrieren, wobei der sekundäre Kranbalken (311) optional ausfahrbar und/oder einfahrbar ist; und
ii. einen Computer mit einem Prozessor, der mit einem Speicher und Schnittstellen verbunden ist, wobei der Speicher Befehle enthält, die, wenn sie vom Prozessor ausgeführt werden, den Prozessor veranlassen, eine der beiden Start- und Bergungsarmbaugruppen für den Start oder die Landung des Flugobjekts (302) auf der Grundlage der aktuellen Windrichtung und Bewegungsrichtung des Basisfahrzeugs (320) sowie der Form der Turbulenzspur hinter dem Basisfahrzeug (320) auszuwählen,
wobei:
- das Flugobjekt (302) ausgestattet ist mit: einem Aufhängungskabel (304) mit einem Verriegelungselement (306);
- jeder Kabelauslöse-/Einziehmechanismus zum Auslösen und/oder Einziehen des mit dem Verriegelungselement (306) verbundenen Aufhängungskabels (304) konfiguriert ist; und
- das Flugobjekt (302) so konfiguriert ist, dass es sich dem Basisfahrzeug (320) so nähert, dass das Verriegelungselement (306) mit der Aufnahmeverriegelung (308) an der ausgewählten Seite des Basisfahrzeugs (320) verriegelt und der mit der Aufnahmeverriegelung (308) verbundene Kabelauslöse-/Einziehmechanismus so konfiguriert ist, dass er in das Aufhängungskabel (304) eingreift.

2. Das PTOL-System (300) gemäß Anspruch 1, umfassend ein Flugobjekt (302), wobei das Flugobjekt (302) mit einem ballistischen Fallschirm (340) ausgestattet ist, der so konfiguriert ist, dass er sofort nach dem Einrasten des Aufhängungskabels (304) mit einer der beiden Start- und Bergungsarmbaugruppen ausgelöst wird, wobei der Computer die Aktivierung des ballistischen Fallschirms (340) steuert, wobei der ballistische Fallschirm (340) optional ein ballistischer Steigfallschirm ist.

3. Das PTOL-System (300) gemäß Anspruch 1 oder 2, wobei jeder der Hauptmasten (310): (i) ausfahrbar und/oder einfahrbar ist; (ii) stabilisiert ist, um die relative Bewegung des Hauptmasts (310) zu minimieren, die aus der Bewegung des Basisfahrzeugs (320) resultiert; (iii) um mindestens eine Achse schwenkbar ist; und/oder (iv) in einem Winkel geneigt ist, um das Einrasten des Verriegelungselements (306) in die Aufnahmeverriegelung (308) zu erleichtern.

4. Das PTOL-System (300) gemäß einem der Ansprüche 1 bis 3, umfassend ein Basisfahrzeug, wobei das Basisfahrzeug (320) ein Wasserfahrzeug ist.

5. Das PTOL-System (300) gemäß einem der Ansprüche 1 bis 4, wobei jeder der Hauptmasten (310) eine Landefläche (330) umfasst, die um mindestens eine Achse schwenkbar ist.

6. Das PTOL-System (300) gemäß einem der Ansprüche 1 bis 5, das ferner einen Aufzug (360) umfasst, der zum Transportieren des Flugobjekts (302) innerhalb des Basisfahrzeugs (320) dient, wobei das Basisfahrzeug (320) optional einen Stauraum (460) umfasst, der zum Verstauen des Flugobjekts (302) dient.

7. Das PTOL-System (300) gemäß einem der Ansprüche 1 bis 6, umfassend ein Basisfahrzeug, wobei:
(i) das Basisfahrzeug (320) aus der Liste ausgewählt ist, die besteht aus:
• einem Landfahrzeug;
• einem Lastwagen;
• einem Militärfahrzeug;
• einem hochmobilen Mehrzweck-Radfahrzeug (High Mobility Multipurpose Wheeled Vehicle, HMMWV);
• einem gepanzerten Mannschaftstransporter;
• einem Wasserfahrzeug (z. B. einem Boot oder einem U-Boot);
• einem Flugzeug; und
• einer beweglichen Plattform; und
(ii) das Flugobjekt (302) aus der folgenden Liste ausgewählt ist:
• einem unbemannten Luftfahrzeug (unmanned aerial vehicle, UAV);
• einem besatzungsgeführten Flugzeug; und
• einem Paket.

8. Das PTOL-System (300) gemäß einem der Ansprüche 1 bis 7, umfassend ein Flugobjekt (302), wobei das Flugobjekt (302) so konfiguriert ist, mindestens einer Flugbahn gemäß einer ausgewählten Landungsszenario zu folgen, wobei die mindestens eine Flugbahn aus der folgenden Liste ausgewählt wird:
• Annäherung an das Basisfahrzeug gegen den Wind;
• Fliegen entlang einer Richtung, die quer zur Windrichtung oder zur Bewegung des Basisfahrzeugs verläuft;
• wiederholtes Hin- und Herfliegen quer zur Windrichtung oder zur Bewegung des Basisfahrzeugs;
• Aufsteigen und anschließendes allmähliches Sinken;
• wiederholtes Aufsteigen und Sinken; und
• einem Flugmanöver, das die Flugdauer/Flugbahn des Flugobjekts verlängert, sodass die auf dieses einwirkende Winddrift zu einer Verzögerung zwischen dem Flugobjekt und dem Basisfahrzeug führt, die ein effektives Herunterziehen des Flugobjekts auf das Basisfahrzeug durch das Auffangkabel ermöglicht.

9. Automatisiertes Verfahren zum Punktlanden eines mit einem ballistischen Fallschirm ausgestatteten Flugobjekts auf einem Punktstart- und Lande-System (PTOL) (300) gemäß einem der Ansprüche 1 bis 8, wobei das Verfahren die folgenden Schritte umfasst:
a. Erfassen (702) von Parametern in der Umgebung eines Basisfahrzeugs, die mindestens die Windgeschwindigkeit und die Windrichtung an diesem Ort umfassen;
b. Erfassen (704) von Parametern des Flugobjekts, die mindestens dessen Geschwindigkeit, Richtung und Höhe umfassen;
c. Erfassen (706) von Parametern des Basisfahrzeugs, die mindestens dessen Geschwindigkeit, Richtung und Höhe umfassen;
d. Ermitteln (708) der aktuellen Betriebseigenschaften von Landungssystemkomponenten des Basisfahrzeugs;
e. Erzeugen (710) potenzieller Landungsszenarien gemäß den erfassten Parametern und den aktuellen Betriebseigenschaften;
f. Auswählen (712) eines zu implementierenden Landungsszenarios; und
g. Ausführen (714) des ausgewählten Landungsszenarios und Führen des Flugobjekts entlang mindestens einer Flugbahn gemäß dem ausgewählten Landungsszenario durch Steuern der Flugsteuerungen des Flugobjekts und selektives Aktivieren und Manövrieren der Komponenten des Landesystems, umfassend:
i. Leiten (716) des Flugobjekts, um sich dem Basisfahrzeug so zu nähern, dass ein an dem Flugobjekt aufgehängtes Verriegelungselement an einem mit dem Basisfahrzeug verbundenen Aufnahmekabel einrastet;
ii. Aktivieren des ballistischen Fallschirms; und
iii. Freigeben und/oder Einziehen (718) des Aufnahmekabels mit einem Kabelauslöse- /Einziehmechanismus und Herunterziehen des Flugobjekts auf eine Landefläche am Basisfahrzeug.

10. Verfahren nach Anspruch 9, wobei die mindestens eine Flugbahn aus der folgenden Liste ausgewählt wird:
• Annäherung an das Basisfahrzeug gegen den Wind;
• Fliegen entlang einer Richtung, die quer zur Windrichtung oder zur Bewegung des Basisfahrzeugs verläuft;
• wiederholtes Hin- und Herfliegen quer zur Windrichtung oder zur Bewegung des Basisfahrzeugs;
• Aufsteigen und dann allmähliches Absenken;
• wiederholtes Aufsteigen und Sinken; und
• einem Flugmanöver, das die Flugdauer des Flugobjekts verlängert, so dass die Winddrift zu einer Verzögerung zwischen dem Flugobjekt und dem Basisfahrzeug führt, die ein effektives Herunterziehen des Flugobjekts auf das Basisfahrzeug durch das Auffangkabel ermöglicht

## Revendications

1. Système de décollage et d'atterrissage ponctuel (PTOL) (300), destiné à être monté sur un véhicule de base (320), configuré pour effectuer le décollage et l'atterrissage d'un objet volant (302) à depuis/sur ledit véhicule de base (320), le système (300) comprenant :
i. deux ensembles de bras de lancement et de récupération, l'un étant configuré pour être positionné sur un côté du véhicule de base (320), et l'autre étant configuré pour être positionné sur le côté opposé de celui-ci, chaque ensemble comprenant :
(a) un mât principal (310) ;
(b) une accroche de réception (308) ;
(c) un mécanisme de libération/rétraction de câble ; et
(d) une poutre de grue secondaire (311) associée audit mât principal (310), et configurée pour manœuvrer ledit objet volant (302) par rapport audit mât principal (310), ladite poutre de grue secondaire (311) étant, de manière optionnelle, extensible et/ou rétractable ; et
ii. un ordinateur comprenant un processeur couplé à une mémoire et à des interfaces, ladite mémoire contenant des instructions qui, lorsqu'elles sont exécutées par le processeur, amènent le processeur à sélectionner l'un desdits deux ensembles de bras de lancement et de récupération pour le décollage ou l'atterrissage dudit objet volant (302) en fonction de la direction actuelle du vent et de la direction du mouvement du véhicule de base (320), ainsi que de la forme du sillage de turbulence derrière le véhicule de base (320),
- l'objet volant (302) étant équipé : d'un câble de suspension (304) muni d'un élément d'accrochage (306) ;
- chaque mécanisme de libération/rétraction de câble étant configuré pour libérer et/ou rétracter ledit câble de suspension (304) couplé audit élément d'accrochage (306) ; et
- l'objet volant (302) étant configuré pour s'approcher du véhicule de base (320) de telle sorte que l'élément d'accrochage (306) s'accroche à l'accroche de réception (308) situé du côté sélectionné du véhicule de base (320), et le mécanisme de libération/rétraction de câble associé à ladite accroche de réception (308) est configuré pour se mettre en prise avec le câble de suspension (304).

2. Système PTOL (300) selon la revendication 1, comprenant un objet volant (302), ledit objet volant (302) étant équipé d'un parachute balistique (340) configuré pour être déployé immédiatement lors de l'accrochage du câble de suspension (304) à l'un desdits deux ensembles de bras de lancement et de récupération, ledit ordinateur contrôlant l'activation dudit parachute balistique (340), ledit parachute balistique (340) étant, de manière optionnelle, un parachute balistique ascensionnel.

3. système PTOL (300) selon l'une des revendications 1 ou 2, dans lequel chacun desdits mâts principaux (310) est : (i) extensible et/ou rétractable ; (ii) stabilisé, de manière à minimiser le mouvement relatif du mât principal (310) dû au mouvement dudit véhicule de base (320) ; (iii) pivotant autour d'au moins un axe ; et/ou (iv) incliné selon un angle afin de faciliter l'accrochage dudit élément d'accrochage (306) à ladite accroche de réception (308).

4. Système PTOL (300) selon l'une quelconque des revendications 1 à 3, comprenant un véhicule de base, ledit véhicule de base (320) étant un navire aquatique.

5. Système PTOL (300) selon l'une quelconque des revendications 1 à 4, dans lequel chacun des mâts principaux (310) comprend une surface d'atterrissage (330), laquelle est pivotante autour d'au moins un axe.

6. Système PTOL (300) selon l'une quelconque des revendications 1 à 5, comprenant en outre un élévateur (360), apte à transporter ledit objet volant (302) à l'intérieur dudit véhicule de base (320), ledit véhicule de base (320) comprenant, de manière optionnelle, un compartiment de stockage (460), apte à ranger ledit objet volant (302).

7. Système PTOL (300) selon l'une quelconque des revendications 1 à 6, comprenant un véhicule de base, dans lequel :
(i) ledit véhicule de base (320) est sélectionné dans la liste constituée de :
• un véhicule terrestre ;
• un camion ;
• un véhicule militaire ;
• un véhicule sur roues polyvalent à grande mobilité (HMMWV) ;
• un transport de troupes blindé ;
• un navire aquatique (tel qu'un bateau ou un sous-marin) ;
• un aéronef ; et
• une plate-forme mobile ; et
(ii) ledit objet volant (302) est sélectionné dans la liste constituée de :
• un véhicule aérien sans pilote (UAV) ;
• un aéronef piloté ; et
• un colis.

8. Système PTOL (300) selon l'une quelconque des revendications 1 à 7, comprenant un objet volant (302), dans lequel ledit objet volant (302) est configuré pour suivre au moins une trajectoire de vol, conformément à un scénario d'atterrissage sélectionné, ladite au moins une trajectoire de vol étant sélectionnée dans la liste constituée de :
• une approche dudit véhicule de base contre le vent ;
• un vol selon une direction transversale à la direction du vent ou au mouvement dudit véhicule de base ;
• un vol répété de va-et-vient transversal à la direction du vent ou au mouvement dudit véhicule de base ;
• une ascension suivie d'une descente progressive ;
• des ascensions et descentes répétées ; et
• une manoeuvre de vol qui prolonge la durée/la trajectoire de vol dudit objet volant, de telle sorte qu'une dérive due au vent agissant sur celui-ci entraîne un décalage entre ledit objet volant et ledit véhicule de base, permettant ainsi une traction efficace dudit objet volant vers ledit véhicule de base au moyen dudit câble de réception.

9. Procédé automatisé pour l'atterrissage ponctuel d'un objet volant équipé d'un parachute balistique sur un système de décollage et d'atterrissage ponctuel (PTOL) (300) selon l'une quelconque des revendications 1 à 8, le procédé comprenant les étapes suivantes :
a. acquisition (702) de paramètres à proximité d'un véhicule de base, comprenant au moins la vitesse et la direction du vent audit emplacement ;
b. acquisition (704) de paramètres dudit objet volant, comprenant au moins sa vitesse, sa direction et son altitude ;
c. acquisition (706) de paramètres dudit véhicule de base, comprenant au moins sa vitesse, sa direction et son altitude ;
d. obtention (708) des caractéristiques opérationnelles actuelles de composants du système d'atterrissage dudit véhicule de base ;
e. génération (710) de potentiels scénarios d'atterrissage conformément aux paramètres acquis et aux caractéristiques opérationnelles actuelles ;
f. sélection (712) d'un scénario d'atterrissage à mettre en œuvre ; et
g. exécution (714) du scénario d'atterrissage sélectionné, et guidage dudit objet volant le long d'au moins une trajectoire de vol conformément audit scénario d'atterrissage sélectionné, en gérant les commandes de vol dudit objet volant et en activant et manœuvrant sélectivement les composants dudit système d'atterrissage, comprenant :
i. diriger (716) ledit objet volant pour qu'il s'approche dudit véhicule de base de telle sorte qu'un élément d'accrochage suspendu audit objet volant s'accroche à un câble de réception couplé audit véhicule de base ;
ii. activer ledit parachute balistique ; et
iii. libérer et/ou rétracter (718) ledit câble de réception à l'aide d'un mécanisme de libération/rétraction de câble, et tirer ledit objet volant vers une surface d'atterrissage dudit véhicule de base.

10. Procédé selon la revendication 9, dans lequel ladite au moins une trajectoire de vol est sélectionnée dans la liste constituée de :
• une approche dudit véhicule de base contre le vent ;
• un vol selon une direction transversale à la direction du vent ou au mouvement dudit véhicule de base ;
• un vol répété de va-et-vient transversal à la direction du vent ou au mouvement dudit véhicule de base ;
• une ascension suivie d'une descente progressive ;
• des ascensions et descentes répétées ; et
• une manœuvre de vol qui prolonge la durée de vol dudit objet volant, de telle sorte qu'une dérive due au vent entraîne un décalage entre ledit objet volant et ledit véhicule de base, permettant ainsi une traction efficace dudit objet volant vers ledit véhicule de base au moyen dudit câble de réception.
